# EUROPEAN PATENT APPLICATION

(11) **EP 4 521 802 A1**
(43) Date of publication of application: **12.03.2025**
(21) Application number: 23799274.8
(22) Date of filing: 05.05.2023
(51) Int. Cl.: H04W 24/02

(54) **MODEL ACQUISITION METHOD AND COMMUNICATION DEVICE**

(30) Priority: 05.05.2022 CN 202210483893; 05.05.2022 CN 202210482186
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN); CHONG, Weiwei, Dongguan, Guangdong 523863 (CN)
(74) Representative: Cabinet Beaumont
(86) International application number: PCT/CN2023/092194
(87) International publication number: WO 2023/213288

(57) **Abstract**

This application discloses a model obtaining method and a communication device, and pertains to the field of communication technologies. The model obtaining method in embodiments of this application includes: sending, by a first communication device, a first request to a second communication device, where the first request is used to request to obtain information of at least one third communication device, and each third communication device is able to provide model information of at least one model required by the first communication device; receiving, by the first communication device, information of at least one third communication device that is sent by the second communication device; and obtaining, by the first communication device, model information of a plurality of models based on the information of the at least one third communication device, where the plurality of models are used to derive data analytics result information.

## Description

### CROSS-REFERENCE TO RELATED APPLICATIONS

This application claims priorities to Chinese Patent Application No. 202210483893.4, filed on May 5, 2022 and entitled "MODEL OBTAINING METHOD AND COMMUNICATION DEVICE", and to Chinese Patent Application No. 202210482186.3, filed on May 5, 2022 and entitled "MODEL PROCESSING METHOD AND APPARATUS, NETWORK-SIDE DEVICE, AND READABLE STORAGE MEDIUM", both of which are incorporated herein by reference in their entireties.

### TECHNICAL FIELD

This application pertains to the field of communication technologies, and specifically, relates to a model obtaining method and a communication device.

### BACKGROUND

A network data analytics function (Network Data Analytics Function, NWDAF) automatically perceives and analyzes a network based on network data, and participates in a full life cycle of network planning, construction, operation and maintenance, network optimization, and operations. This makes the network easy to maintain and control, improves utilization of network resources, and improves service experience of a user. The NWDAF may include two parts: an analytics logical function (Analytics Logical Function, AnLF) and a model training logical function (Model Training Logical Function, MTLF). The AnLF is responsible for an inference function. The MTLF is responsible for a training function.

When receiving a task initiated by a consumer (consumer), the AnLF needs to obtain a model, to use the model to perform inference and derive an analytics result. Therefore, a model obtaining method urgently needs to be implemented for persons skilled in the field.

### SUMMARY

Embodiments of this application provide a model obtaining method and a communication device, to resolve a problem about how to implement a model obtaining method.

According to a first aspect, a model obtaining method is provided, including:
sending, by a first communication device, a first request to a second communication device, where the first request is used to request to obtain information of at least one third communication device, and each third communication device is able to provide model information of at least one model required by the first communication device;
receiving, by the first communication device, information of at least one third communication device that is sent by the second communication device; and
obtaining, by the first communication device, model information of a plurality of models based on the information of the at least one third communication device, where the plurality of models are used to derive data analytics result information.

According to a second aspect, a model obtaining method is provided, including:
receiving, by a second communication device, a first request sent by a first communication device, where the first request is used to request to obtain information of at least one third communication device, and each third communication device is able to provide model information of at least one model required by the first communication device;
determining, by the second communication device, at least one third communication device according to the first request; and
sending, by the second communication device, information of the at least one third communication device to the first communication device, where the information of the at least one third communication device is used for the first communication device to obtain model information of a plurality of models, and the plurality of models are used to derive data analytics result information.

According to a third aspect, a model obtaining method is provided, including:
receiving, by a third communication device, a second request sent by a first communication device, where the second request is used to request to obtain at least one model; and
sending, by the third communication device, model information of at least one model to the first communication device according to the second request, where the second request includes at least one of the following:
   an analytics task identifier, where the analytics task identifier is used to identify a data analytics task to which a required model is applicable;
   an identifier of a required model;
   the number of required models; or
   model attribute information that a model needs to meet.

According to a fourth aspect, a model obtaining method is provided, including:
sending, by a fourth communication device, a task request to a first communication device; and
receiving, by the fourth communication device, data analytics result information sent by the first communication device, where the data analytics result information is obtained by the first communication device by performing analytics based on a plurality of models, the plurality of models are obtained by the first communication device based on information of at least one third communication device, and each third communication device is able to provide model information of at least one model required by the first communication device.

According to a fifth aspect, a model obtaining apparatus is provided, including:
a sending module, configured to send a first request to a second communication device, where the first request is used to request to obtain information of at least one third communication device, and each third communication device is able to provide model information of at least one model required by a first communication device;
a receiving module, configured to receive information of at least one third communication device that is sent by the second communication device; and
an obtaining module, configured to obtain model information of a plurality of models based on the information of the at least one third communication device, where the plurality of models are used to derive data analytics result information.

According to a sixth aspect, a model obtaining apparatus is provided, including:
a receiving module, configured to receive a first request sent by a first communication device, where the first request is used to request to obtain information of at least one third communication device, and each third communication device is able to provide model information of at least one model required by the first communication device;
a processing module, configured to determine at least one third communication device according to the first request; and
a sending module, configured to send information of the at least one third communication device to the first communication device, where the information of the at least one third communication device is used for the first communication device to obtain model information of a plurality of models, and the plurality of models are used to derive data analytics result information.

According to a seventh aspect, a model obtaining apparatus is provided, including:
a receiving module, configured to receive a second request sent by a first communication device, where the second request is used to request to obtain at least one model; and
a sending module, configured to send model information of at least one model to the first communication device according to the second request, where the second request includes at least one of the following:
   an analytics task identifier, where the analytics task identifier is used to identify a data analytics task to which a required model is applicable;
   an identifier of a required model;
   the number of required models; or
   model attribute information that a model needs to meet.

According to an eighth aspect, a model obtaining apparatus is provided, including:
a sending module, configured to send a task request to a first communication device; and
a receiving module, configured to receive data analytics result information sent by the first communication device, where the data analytics result information is obtained by the first communication device by performing analytics based on a plurality of models, the plurality of models are obtained by the first communication device based on information of at least one third communication device, and each third communication device is able to provide model information of at least one model required by the first communication device.

According to a ninth aspect, a first communication device is provided, where the first communication device includes a processor and a memory, the memory stores a program or instructions capable of running on the processor, and when the program or instructions are executed by the processor, the steps of the method according to the first aspect are implemented.

According to a tenth aspect, a first communication device is provided, including a processor and a communication interface. The communication interface is configured to: send, for the first communication device, a first request to a second communication device, where the first request is used to request to obtain information of at least one third communication device, and each third communication device is able to provide model information of at least one model required by the first communication device; receive information of at least one third communication device that is sent by the second communication device; and obtain model information of a plurality of models based on the information of the at least one third communication device.

According to an eleventh aspect, a second communication device is provided, where the second communication device includes a processor and a memory, the memory stores a program or instructions capable of running on the processor, and when the program or instructions are executed by the processor, the steps of the method according to the second aspect are implemented.

According to a twelfth aspect, a second communication device is provided, including a processor and a communication interface. The communication interface is configured to: receive a first request sent by a first communication device, where the first request is used to request to obtain information of at least one third communication device, and each third communication device is able to provide model information of at least one model required by the first communication device; and send information of the at least one third communication device to the first communication device, where the information of the at least one third communication device is used for the first communication device to obtain model information of a plurality of models. The processor is configured to determine at least one third communication device according to the first request.

According to a thirteenth aspect, a third communication device is provided, where the third communication device includes a processor and a memory, the memory stores a program or instructions capable of running on the processor, and when the program or instructions are executed by the processor, the steps of the method according to the first aspect are implemented.

According to a fourteenth aspect, a third communication device is provided, including a processor and a communication interface. The communication interface is configured to: receive a second request sent by a first communication device, where the second request is used to request to obtain at least one model; and send model information of at least one model to the first communication device according to the second request, where the second request includes at least one of the following: an analytics task identifier, where the analytics task identifier is used to identify a data analytics task to which a required model is applicable; an identifier of a required model; the number of required models; or model attribute information that a model needs to meet.

According to a fifteenth aspect, a fourth communication device is provided, where the fourth communication device includes a processor and a memory, the memory stores a program or instructions capable of running on the processor, and when the program or instructions are executed by the processor, the steps of the method according to the first aspect are implemented.

According to a sixteenth aspect, a fourth communication device is provided, including a processor and a communication interface. The communication interface is configured to: send a task request to a first communication device; and receive data analytics result information sent by the first communication device, where the data analytics result information is obtained by the first communication device by performing analytics based on a plurality of models, the plurality of models are obtained by the first communication device based on information of at least one third communication device, and each third communication device is able to provide model information of at least one model required by the first communication device.

According to a seventeenth aspect, a communication system is provided, including a first communication device, a second communication device, a third communication device, and a fourth communication device, where the first communication device may be configured to perform the steps of the model obtaining method according to the first aspect, the second communication device may be configured to perform the steps of the model obtaining method according to the second aspect, the third communication device may be configured to perform the steps of the model obtaining method according to the third aspect, and the fourth communication device may be configured to perform the steps of the model obtaining method according to the fourth aspect.

According to an eighteenth aspect, a readable storage medium is provided, where the readable storage medium stores a program or instructions, and when the program or instructions are executed by a processor, the steps of the method according to the first aspect are implemented, or the steps of the method according to the second aspect are implemented, or the steps of the method according to the third aspect are implemented, or the steps of the method according to the fourth aspect are implemented.

According to a nineteenth aspect, a chip is provided, where the chip includes a processor and a communication interface, the communication interface is coupled to the processor, and the processor is configured to run a program or instructions to implement the method according to the first aspect, or implement the method according to the second aspect, or implement the method according to the third aspect, or implement the method according to the fourth aspect.

According to a twentieth aspect, a computer program or program product is provided, where the computer program or program product is stored in a storage medium, and the computer program or program product is executed by at least one processor to implement the steps of the model obtaining method according to any one of the first aspect to the fourth aspect.

In the embodiments of this application, a first communication device sends a first request to a second communication device, where the first request is used to request to obtain information of at least one third communication device, and each third communication device is able to provide model information of at least one model required by the first communication device. Further, the first communication device may obtain model information of a plurality of models based on information of at least one third communication device that is sent by the second communication device. In this way, a model obtaining method is implemented, with low implementation complexity and high efficiency. In addition, the plurality of models are used to derive data analytics result information, so that a data analytics result is more accurate.

### BRIEF DESCRIPTION OF THE DRAWINGS

FIG. 1 is a structural diagram of a wireless communication system to which embodiments of this application are applicable;
FIG. 2 is a first schematic flowchart of a model obtaining method according to an embodiment of this application;
FIG. 3 is a first schematic diagram of an interaction process of a model obtaining method according to an embodiment of this application;
FIG. 4 is a second schematic flowchart of a model obtaining method according to an embodiment of this application;
FIG. 5 is a third schematic flowchart of a model obtaining method according to an embodiment of this application;
FIG. 6 is a fourth schematic flowchart of a model obtaining method according to an embodiment of this application;
FIG. 7 is a first schematic structural diagram of a model obtaining apparatus according to an embodiment of this application;
FIG. 8 is a second schematic structural diagram of a model obtaining apparatus according to an embodiment of this application;
FIG. 9 is a third schematic structural diagram of a model obtaining apparatus according to an embodiment of this application;
FIG. 10 is a fourth schematic structural diagram of a model obtaining apparatus according to an embodiment of this application;
FIG. 11 is a schematic structural diagram of a communication device according to an embodiment of this application;
FIG. 12 is a schematic structural diagram of a network-side device according to an embodiment of this application;
FIG. 13 is a first schematic flowchart of a model processing method according to an embodiment of this application; and
FIG. 14 is a second schematic flowchart of a model processing method according to an embodiment of this application.

### DETAILED DESCRIPTION

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit the number of objects. For example, there may be one or more first objects. In addition, in this specification and the claims, "and/or" represents at least one of connected objects, and the character "/" typically represents an "or" relationship between the associated objects.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

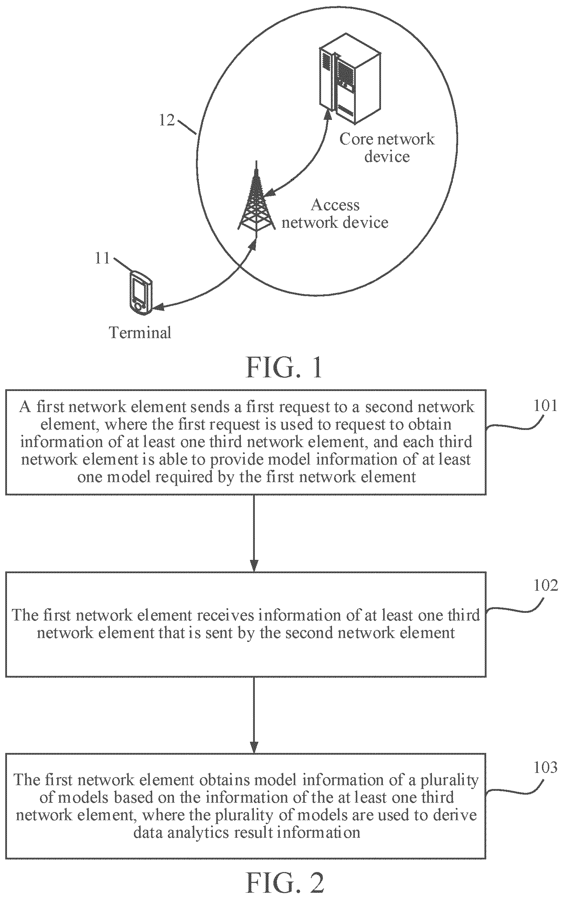

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. In addition to the foregoing terminal devices, the terminal 11 may alternatively be a chip in a terminal, for example, a modem (Modem) chip or a system on chip (System on Chip, SoC). It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in embodiments of this application, but a specific type of the core network device is not limited.

Currently, a network data analytics function (Network Data Analytics Function, NWDAF) is introduced in the 3rd generation partnership project (3rd Generation Partnership Project, 3GPP) to perform some intelligent analytics. The NWDAF has a specific function of artificial intelligence analytics. The NWDAF performs some operation optimization or statistical analytics by collecting some data, obtaining a result through analytics by using a built-in algorithm and an analytics capability, and providing the result for a core network device. The network data analytics function automatically perceives and analyzes a network based on network data, and participates in a full life cycle of network planning, construction, operation and maintenance, network optimization, and operations. This makes the network easy to maintain and control, improves utilization of network resources, and improves service experience of a user.

For example, the NWDAF can provide an observed service experience related network data analytics (Observed Service Experience related network data analytics) function. This function network element may initiate a request to another network element to request to collect quality of service (Quality of Service, QoS) information, such as uplink and downlink rates and a packet loss rate, of a terminal accessing an IP address of a server, and output statistical information, where the information includes user experience of the terminal accessing the server. The NWDAF may also perform prediction based on historical experience of the terminal accessing the server, for example, predict possible user experience of the terminal in a case that the terminal accesses the server in a specific area within a specific time period in the future.

Usually, analytics or prediction content that the NWDAF can provide is distinguished by using an analytic identifier (Analytic ID). Different analytic IDs and some parameters may be indicated to the NWDAF, so that the NWDAF can provide analytics and prediction results corresponding to the analytic identifiers. For example, for observed service experience analytics provided by the NWDAF, an analytic ID is Service Experience. Therefore, the NWDAF can provide corresponding analytics provided that a network element served by the NWDAF is obtained and an analytic ID is entered in a request for analytics.

The NWDAF may include two parts: an analytics logical function AnLF and a model training logical function MTLF. The AnLF is responsible for an inference function. The MTLF is responsible for a training function. Usually, the AnLF performs inference and derives an analytics result by using a model.

The following describes in detail a model obtaining method provided in the embodiments of this application with reference to the accompanying drawings and by using some embodiments and application scenarios thereof.

FIG. 2 is a first schematic flowchart of a model obtaining method according to an embodiment of this application. As shown in FIG. 2, the method provided in this embodiment includes the following steps:
Step 101: A first communication device sends a first request to a second communication device, where the first request is used to request to obtain information of at least one third communication device, and each third communication device is able to provide model information of at least one model required by the first communication device.

Specifically, the first communication device and the second communication device may be network-side devices (for example, core network devices). The first communication device may be, for example, an AnLF of an NWDAF. The second communication device may be a network repository function (NF Repository Function, NRF). The third communication device may be an MTLF of the NWDAF or an analytics data repository function (Analytics Data Repository Function, ADRF).

For example, the first communication device sends the first request to the second communication device when a task request sent by another communication device is received or another trigger condition is met. The first request is used to request to obtain information of at least one third communication device. Each third communication device is able to provide model information of at least one model required by the first communication device. The model information may be the model itself (for example, a file including the model), a download address of the model, or the like.

Step 102: The first communication device receives information of at least one third communication device that is sent by the second communication device.

Specifically, the second communication device determines the at least one third communication device and sends the information of the at least one third communication device to the first communication device according to the first request, and the first communication device receives the information of the at least one third communication device that is sent by the second communication device. For example, information of a third communication device includes an analytics task identifier supported by the third communication device, an identifier or an address of the third communication device, the number of models available for an analytics task corresponding to the supported analytics task identifier, model attribute information of a supported model, or the like.

Step 103: The first communication device obtains model information of a plurality of models based on the information of the at least one third communication device, where the plurality of models are used to derive data analytics result information.

Specifically, each third communication device may provide model information of at least one model, and the model information of the plurality of models may be obtained from the at least one third communication device. Further, the first communication device may obtain the plurality of models, and perform analytics and other operations based on the plurality of models, so that a data analytics result can be more accurate.

According to the method in this embodiment, a first communication device sends a first request to a second communication device, where the first request is used to request to obtain information of at least one third communication device, and each third communication device is able to provide model information of at least one model required by the first communication device. Further, the first communication device may obtain model information of a plurality of models based on information of at least one third communication device that is sent by the second communication device. In this way, a model obtaining method is implemented, with low implementation complexity and high efficiency. In addition, the plurality of models are used to derive data analytics result information, so that a data analytics result can be more accurate.

Optionally, the first request includes: an analytics task identifier, where the analytics task identifier is used to identify a data analytics task to which a required model is applicable. The first request further includes at least one of the following:
first indication information, where the first indication information is used to indicate to request to obtain a plurality of models;
the number of required models;
second indication information, where the second indication information is used to indicate to request to obtain information of a plurality of third communication devices;
the number of required third communication devices;
a sorting mode, where the sorting mode is used to indicate a sorting mode of obtained information of a plurality of third communication devices; or
model attribute information that a model needs to meet.

The analytics task identifier may indicate a data analytics task to which a model required by the first communication device is applicable.

For example, information of a plurality of third communication devices is sorted in descending order of model quantities. For example, three MTLFs are included: an MTLF 1, an MTLF 2, and an MTLF 3, where the MTLF 3 meets a requirement of the AnLF, and the MTLF 1, the MTLF 2, and the MTLF 3 have two models, one model, and three models respectively. In this case, MTLF information finally returned by the NRF to the AnLF is sorted in an order of the MTLF 3, the MTLF 1, and the MTLF 2.

The number of required models may be a numerical value or a number range. For example, the minimum number and the maximum number are defined. The number of required third communication devices is similar to the number of required models.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

The number of models corresponding to the analytics task identifier supported by the third communication device is the number of models able to process an analytics task corresponding to the analytics task identifier.

Optionally, the model attribute information includes at least one of the following: scope information of model use, a model identifier, result evaluation information of model training, result evaluation information of model use, a model size, model inference duration, or training data information.

Optionally, the scope information of model use includes at least one of the following: a target object of a model, a target time range, a target location range, single network slice selection assistance information S-NSSAI, or a data network name DNN. The target time range is used to indicate a time range within which the model is to be used. The target location range is used to indicate a location range within which the model is to be used.

Optionally, the result evaluation information of model training includes at least one of the following: accuracy, error information, model training duration, or a data amount of model training; and the result evaluation information of model use includes at least one of the following: accuracy, error information, or model running duration.

Specifically, the target object of the model indicates, for example, to perform mobility analytics for a specific terminal; the target time range indicates that the model can be used within the target time range; and the target location range indicates that the model can be used within the target location range, for example, the target object is within the target location range.

The result evaluation information of model training is used to describe result evaluation information of a trained model, for example, accuracy of recognition or decision-making, error information, duration, or a data amount.

For example, the error information may be a mean absolute error (Mean Absolute Error, MAE) or a root mean square error (Root Mean Square Error, RMSE).

The result evaluation information of model use is similar to the result evaluation information of model training.

The model size is a size of storage space required for storing the model or running the model.

The model inference duration is used to represent duration within which a model obtains a convergent data inference result during running.

The training data information may include, for example, at least one of the following: source information of training data, for example, source location information of data, or information about a source communication device; or time information of training data, for example, the training data is data within a period from three months ago to two months ago.

The model attribute information that a model needs to meet is, for example, as follows: A target object of the model is a terminal in a specific area, a model size is within 500 MB, accuracy of model use is greater than a specific threshold, a source communication device of training data used by the model is a communication device a, and training data is data within the last week or month.

Optionally, the method further includes:
the first communication device obtains the plurality of models based on the model information of the plurality of models; and
the first communication device performs analytics based on the plurality of models to obtain the data analytics result information.

For example, the model information of the plurality of models is addresses of the models. In this case, the plurality of models may be obtained based on the addresses of the models, and analytics may be performed based on the obtained plurality of models to obtain the data analytics result information.

Optionally, the first communication device performs a model inference operation based on each of the plurality of models to obtain a plurality of data inference results; and
the first communication device processes the plurality of data inference results to obtain the data analytics result information.

Final data analytics result information is derived through the foregoing processing, such as aggregation (aggregation) and voting (voting).

For example, the first communication device may process the plurality of data inference results to obtain the data analytics result information in at least one of the following manners:
the first communication device performs weighted averaging on the plurality of data inference results to obtain the data analytics result information;
the first communication device performs an averaging operation on the plurality of inference result data to obtain the analytics result information;
the first communication device accumulates the plurality of inference result data to obtain the analytics result information; or
the first communication device accumulates the plurality of inference result data with performance taken into account to obtain the analytics result information.

Specifically, the weighted averaging, the averaging, and the like are aggregation operations, and the accumulation and the accumulation with performance taken into account are specific implementations of cumulative voting. Performance of a model may be taken into account during accumulation. For example, if accuracy of the model is 0.6, a weight in an inference result may be 0.6.

In the foregoing implementation, model inference, analytics, and other processing are performed based on the plurality of models, and an obtained result has good performance and high accuracy, and is not likely to be affected by a change in a network condition or network data.

Optionally, before step 101, the method further includes:
the first communication device receives a task request sent by a fourth communication device; and
step 101 may be specifically as follows:
   the first communication device sends the first request to the second communication device according to the task request.

Optionally, after the first communication device performs analytics based on the plurality of models to obtain the data analytics result information, the method further includes:
the first communication device sends the data analytics result information to the fourth communication device.

Specifically, the fourth communication device may be a consumer device, for example, an application function (Application Function, AF). The fourth communication device may send a task request to the first communication device to request to obtain data analytics result information corresponding to some data analytics tasks.

Optionally, content included in the task request may be the same as content included in the first request.

Optionally, step 103 may be implemented in the following manner:
the first communication device determines at least one target communication device based on the information of the at least one third communication device and model attribute information that a model needs to meet, and obtains the model information of the plurality of models from the at least one target communication device, where each target communication device is able to provide model information of a model matching the model attribute information.

For example, analytics task identifiers supported by a third communication device are an identifier 1 and an identifier 2, the number of models corresponding to the identifier 1 is 5, the number of models corresponding to the identifier 2 is 10, and for three of the five models corresponding to the identifier 1, use scopes are consistent with a use scope in the model attribute information that needs to be met, result evaluation information of model training and use matches result evaluation information in the required model attribute information, and model sizes also match a model size in the model attribute information. Therefore, the third communication device may serve as a target communication device.

Optionally, the model information of the plurality of models may be obtained from the at least one target communication device specifically in the following manner:
the first communication device sends a second request to the at least one target communication device, where the second request is used to obtain the model information of the plurality of models from the at least one target communication device; and
the first communication device receives the model information of the plurality of models that is sent by the at least one target communication device, where
the second request includes at least one of the following:
   an analytics task identifier, where the analytics task identifier is used to identify a data analytics task to which a required model is applicable;
   an identifier of a required model;
   the number of required models; or
   model attribute information that a model needs to meet.

Specifically, the first communication device receives the model information of the plurality of models that is sent by the at least one target communication device, and each target communication device may send model information of one or more models.

Optionally, the number of the at least one target communication device may be 1, and that the first communication device sends a second request to the at least one target communication device includes:
the first communication device sends the second request to one of the at least one target communication device; and
that the first communication device receives the model information of the plurality of models that is sent by the at least one target communication device includes:
   the first communication device receives the model information of the plurality of models that is sent by the one target communication device. In this case, the target communication device may provide the model information of the plurality of models.

Before the first communication device sends the second request to the one of the at least one target communication device, the method further includes:
the first communication device determines that the one target communication device is able to provide the model information of the plurality of models.

Optionally, the number of the at least one target communication device may be greater than 1, and that the first communication device sends a second request to the at least one target communication device includes:
the first communication device sends the second request to a plurality of target communication devices among the at least one target communication device; and
that the first communication device receives the model information of the plurality of models that is sent by the at least one target communication device includes:
   the first communication device receives the model information of the plurality of models that is sent by the plurality of target communication devices.

Before the first communication device sends the second request to the plurality of target communication devices among the at least one target communication device, the method further includes:
the first communication device determines that none of the at least one target communication device is able to provide model information of all of the plurality of models.

Specifically, in this case, each target communication device may send model information of one or more models. None of the target communication devices is able to provide the model information of all of the plurality of models required by the first communication device. Therefore, the model information needs to be obtained from the plurality of target communication devices.

In the foregoing implementation, the first communication device sends the second request to one or more of the at least one target communication device to obtain the model information of the plurality of models, with low implementation complexity and high efficiency.

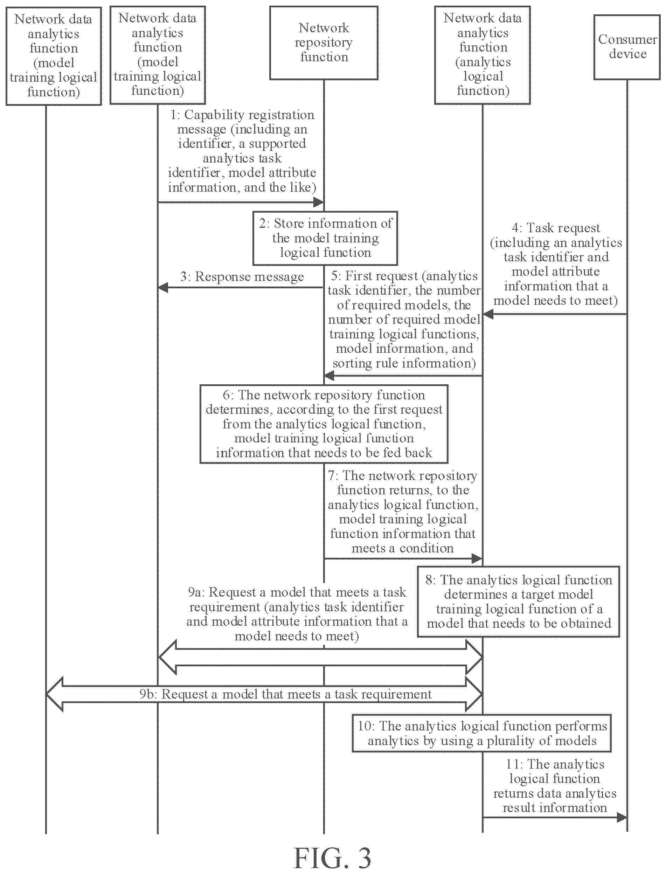

For example, refer to FIG. 3. Step 1: An MTLF (or an NWDAF, or an NWDAF including an MTLF) may send a capability registration message to an NRF, namely, a second communication device. Optionally, the capability registration message includes at least one of the following: an identifier, a supported analytics task identifier, a network function type, a network function instance identifier, the number of models corresponding to the supported analytics task identifier, or model attribute information of at least one supported model.

For example, the capability registration message may be carried in Nnrf_NFManagement_NFRegister Register signaling.

For example, the network function type is as follows: NF type = NWDAF type or MTLF type.

The network function instance identifier (NF instance ID) is identification information of a communication device in current registration, for example, fully qualified domain name (Fully Qualified Domain Name, FQDN) information of the communication device for indicating a location of the communication device and connecting to the communication device, or IP address information (another type of identification information).

The supported analytics task identifier (analytic ID) indicates a type of a task that the NWDAF can perform.

Steps 2 and 3: The NRF stores information of the MTLF and sends a response message. For example, the response message may be carried in Nnrf_NFManagement_NFRegister response signaling. The response message is used to notify a third communication device that registration is successful.

Step 4: A consumer device sends a task request to an AnLF (or an NWDAF, or an AnLF including an MTLF). For example, the task request is carried in Nnwdaf_AnalyticsInfo_Request signaling.

Step 5: Send a first request to the NRF. For example, the first request may be carried in Nnrf_NFDiscovery_Request signaling. The first request includes a task analytics identifier, and may further include at least one of the following:
first indication information, where the first indication information is used to indicate to request to obtain a plurality of models;
the number of required models;
second indication information, where the second indication information is used to indicate to request to obtain information of a plurality of third communication devices;
the number of required third communication devices;
a sorting mode, where the sorting mode is used to indicate a sorting mode of obtained information of a plurality of third communication devices; or
model attribute information that a model needs to meet.

Step 6: The NRF determines, according to the first request from the AnLF, MTLF information to be fed back.

Specifically, after receiving the first request, the NRF searches for all registered MTLFs, selects a final MTLF by matching information, generates an MTLF list, and feeds back MTLF information based on the MTLF list. The first request from the AnLF includes the number of required models and information indicating that information of a plurality of MTLFs is required. In this case, the NRF searches for all MTLFs that support the analytics task identifier included in the first request, and feeds back information about an MTLF that has a plurality of models corresponding to the analytics task identifier. If there are not a plurality of MTLFs meeting the condition, information about other MTLFs that do not meet the model quantity requirement is fed back. In this case, the number of models of a plurality of MTLFs needs to meet the requirement of the number of required models in the first request.

If the first request includes only the number of required MTLFs, the NRF selects information about a plurality of MTLFs that have a model corresponding to the analytics task identifier for feedback.

If the first request includes only the number of required models, the NRF searches, through matching, MTLF information for information about an MTLF that has a plurality of models corresponding to the analytics task identifier for feedback. If no information is found, failure information is returned.

Step 7: The NRF returns information about an MTLF meeting the condition to the AnLF.

Step 8: The AnLF determines a target MTLF from which a model is to be obtained.

Steps 9a and step 9b: The AnLF requests a model that meets a task requirement from the target MTLF. For example, the request includes a task analytics identifier and model attribute information that the model needs to meet.

Step 10: The AnLF performs analytics by using a plurality of models.

Step 11: The AnLF returns data analytics result information to the consumer device. For example, the data analytics result information is carried in Nnwdaf_AnalyticsInfo_Request response signaling.

Optionally, the consumer device may further send the data analytics result information to user equipment, such as a terminal.

The model obtaining method provided in the embodiments of this application may be performed by a model obtaining apparatus. In the embodiments of this application, a model obtaining apparatus provided in the embodiments of this application is described by using an example in which the model obtaining apparatus performs the model obtaining method.

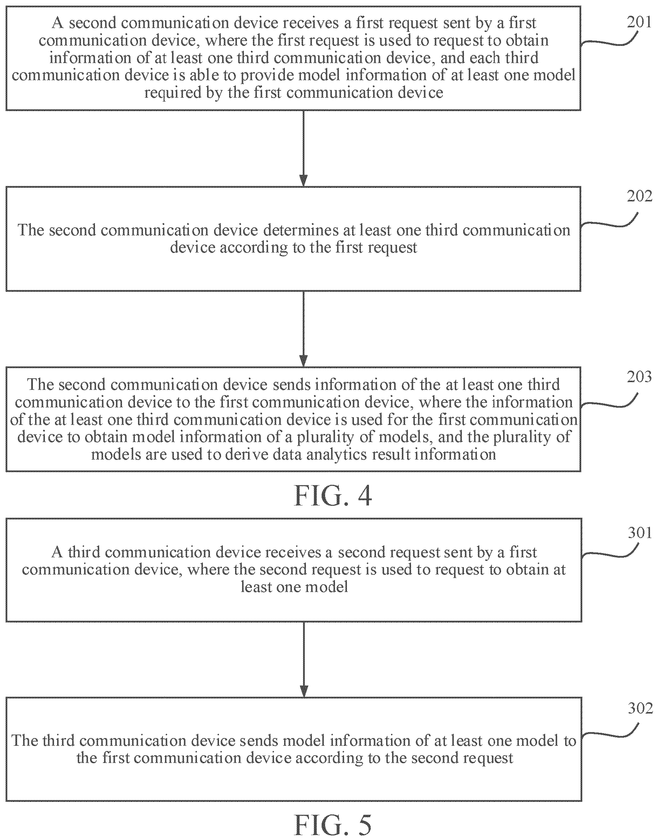

FIG. 4 is a second schematic flowchart of a model obtaining method according to this application. As shown in FIG. 4, the model obtaining method provided in this embodiment includes the following steps:
Step 201: A second communication device receives a first request sent by a first communication device, where the first request is used to request to obtain information of at least one third communication device, and each third communication device is able to provide model information of at least one model required by the first communication device.
Step 202: The second communication device determines at least one third communication device according to the first request.
Step 203: The second communication device sends information of the at least one third communication device to the first communication device, where the information of the at least one third communication device is used for the first communication device to obtain model information of a plurality of models, and the plurality of models are used to derive data analytics result information.

Optionally, the first request includes: an analytics task identifier, where the analytics task identifier is used to identify a data analytics task to which a required model is applicable; and the first request further includes at least one of the following:
first indication information, where the first indication information is used to indicate to request to obtain a plurality of models;
the number of required models;
second indication information, where the second indication information is used to indicate to request to obtain information of a plurality of third communication devices;
the number of required third communication devices;
a sorting mode, where the sorting mode is used to indicate a sorting mode of obtained information of a plurality of third communication devices; or
model attribute information that a model needs to meet.

Optionally, the method further includes:
the second communication device determines, according to the first request sent by the first communication device, the number of the at least one third communication device to be returned.

Optionally, that the second communication device determines the number of the at least one third communication device according to the first request sent by the first communication device includes at least one of the following:
the second communication device determines, based on the first indication information and/or the number of required models, that the number of the at least one third communication device is 1, where the one third communication device is able to provide model information of the plurality of models or model information of models corresponding to the number of required models;
the second communication device determines, based on the first indication information and/or the number of required models, that the number of the at least one third communication device is greater than 1, where none of the plurality of third communication devices is able to provide model information of all of the plurality of models or model information of models corresponding to the number of required models;
the second communication device determines, based on the second indication information, that the number of the at least one third communication device is greater than 1; or
the second communication device determines, based on the number of required third communication devices, that the number of the at least one third communication device is the number of required third communication devices.

Optionally, the model attribute information includes at least one of the following: scope information of model use, a model identifier, result evaluation information of model training, result evaluation information of model use, a model size, model execution duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

Optionally, the method further includes:
the second communication device receives a capability registration message sent by the third communication device, where the capability registration message includes at least one of the following: an analytics task identifier supported by the third communication device, a network function type of the third communication device, a network function instance identifier of the third communication device, the number of models corresponding to the analytics task identifier supported by the third communication device, or model attribute information of at least one model supported by the third communication device.

Specific implementation processes and technical effect of the method in this embodiment are the same as those in the method embodiment on the first communication device side. For details, refer to the detailed descriptions in the method embodiment on the first communication device side. Details are not described herein again.

FIG. 5 is a third schematic flowchart of a model obtaining method according to this application. As shown in FIG. 5, the model obtaining method provided in this embodiment includes the following steps:
Step 301: A third communication device receives a second request sent by a first communication device, where the second request is used to request to obtain at least one model.
Step 302: The third communication device sends model information of at least one model to the first communication device according to the second request.

The second request includes at least one of the following:
an analytics task identifier, where the analytics task identifier is used to identify a data analytics task to which a required model is applicable;
an identifier of a required model;
the number of required models; or
model attribute information that a model needs to meet.

Optionally, the method further includes:
the third communication device sends a capability registration message to a second communication device, where the capability registration message includes at least one the following: an analytics task identifier supported by the third communication device, a network function type of the third communication device, a network function instance identifier of the third communication device, the number of models corresponding to the analytics task identifier supported by the third communication device, or model attribute information of at least one model supported by the third communication device.

Optionally, the model attribute information includes at least one of the following: scope information of model use, a model identifier, result evaluation information of model training, result evaluation information of model use, a model size, model execution duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

Specific implementation processes and technical effect of the method in this embodiment are the same as those in the method embodiment on the first communication device side. For details, refer to the detailed descriptions in the method embodiment on the first communication device side. Details are not described herein again.

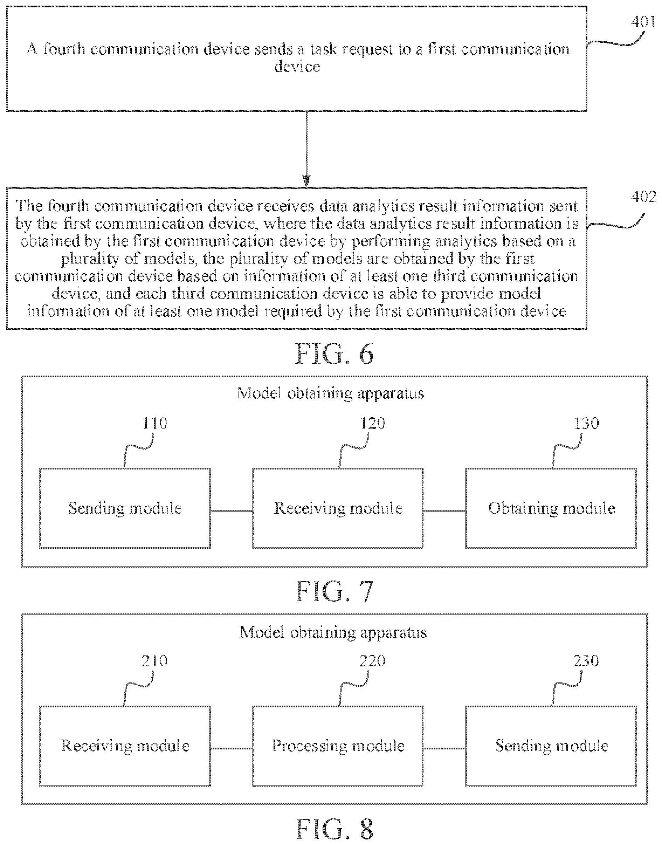

FIG. 6 is a fourth schematic flowchart of a model obtaining method according to this application. As shown in FIG. 6, the model obtaining method provided in this embodiment includes the following steps:
Step 401: A fourth communication device sends a task request to a first communication device.
Step 402: The fourth communication device receives data analytics result information sent by the first communication device, where the data analytics result information is obtained by the first communication device by performing analytics based on a plurality of models, the plurality of models are obtained by the first communication device based on information of at least one third communication device, and each third communication device is able to provide model information of at least one model required by the first communication device.

Optionally, the model attribute information includes at least one of the following: scope information of model use, a model identifier, result evaluation information of model training, result evaluation information of model use, a model size, model execution duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

Specific implementation processes and technical effect of the method in this embodiment are the same as those in the method embodiment on the first communication device side. For details, refer to the detailed descriptions in the method embodiment on the first communication device side. Details are not described herein again.

FIG. 7 is a first schematic structural diagram of a model obtaining apparatus according to this application. The model obtaining apparatus provided in this embodiment may be applied to a first communication device. As shown in FIG. 7, the model obtaining apparatus provided in this embodiment includes:
a sending module 1 10, configured to send a first request to a second communication device, where the first request is used to request to obtain information of at least one third communication device, and each third communication device is able to provide model information of at least one model required by a first communication device;
a receiving module 120, configured to receive information of at least one third communication device that is sent by the second communication device; and
an obtaining module 130, configured to obtain model information of a plurality of models based on the information of the at least one third communication device, where the plurality of models are used to derive data analytics result information.

Optionally, the obtaining module 130 is further configured to:
obtain the plurality of models based on the model information of the plurality of models.

Optionally, the apparatus further includes: a processing module, configured to perform analytics based on the plurality of models to obtain the data analytics result information.

Optionally, the processing module is specifically configured to:
perform a model inference operation based on each of the plurality of models to obtain a plurality of data inference results; and
process the plurality of data inference results to obtain the data analytics result information.

Optionally, the obtaining module 130 is specifically configured to perform at least one of the following operations:
performing weighted averaging on the plurality of data inference results to obtain the data analytics result information;
performing an averaging operation on the plurality of inference result data to obtain the analytics result information;
accumulating the plurality of inference result data to obtain the analytics result information; or
accumulating the plurality of inference result data with performance taken into account to obtain the analytics result information.

Optionally, the receiving module 120 is further configured to:
receive a task request sent by a fourth communication device; and
the sending module 110 is specifically configured to:
   send the first request to the second communication device according to the task request; and
   send the data analytics result information to the fourth communication device.

Optionally, the obtaining module 130 is specifically configured to:
determine at least one target communication device based on the information of the at least one third communication device and model attribute information that a model needs to meet, and obtaining the model information of the plurality of models from the at least one target communication device, where each target communication device is able to provide model information of a model matching the model attribute information.

Optionally, the first request includes:
an analytics task identifier, where the analytics task identifier is used to identify a data analytics task to which a required model is applicable; and
the first request further includes at least one of the following:
   first indication information, where the first indication information is used to indicate to request to obtain a plurality of models;
   the number of required models;
   second indication information, where the second indication information is used to indicate to request to obtain information of a plurality of third communication devices;
   the number of required third communication devices;
   a sorting mode, where the sorting mode is used to indicate a sorting mode of obtained information of a plurality of third communication devices; or
   model attribute information that a model needs to meet.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

Optionally, the sending module 110 is further configured to:
send a second request to the at least one target communication device, where the second request is used to obtain the model information of the plurality of models from the at least one target communication device; and
the receiving module 120 is further configured to receive the model information of the plurality of models that is sent by the at least one target communication device, where
the second request includes at least one of the following:
   an analytics task identifier, where the analytics task identifier is used to identify a data analytics task to which a required model is applicable;
   an identifier of a required model;
   the number of required models; or
   model attribute information that a model needs to meet.

Optionally, the sending module 110 is specifically configured to:
send the second request to one of the at least one target communication device;
the receiving module 120 is specifically configured to:
   receive the model information of the plurality of models that is sent by the one target communication device; and
   the processing module is further configured to:
      determine that the one target communication device is able to provide the model information of the plurality of models.

Optionally, the sending module 110 is specifically configured to:
send the second request to a plurality of target communication devices among the at least one target communication device;
the receiving module 120 is specifically configured to:
   receive the model information of the plurality of models that is sent by the plurality of target communication devices; and
   the processing module is further configured to:
      determine that none of the at least one target communication device is able to provide model information of all of the plurality of models.

Optionally, the model attribute information includes at least one of the following: scope information of model use, a model identifier, result evaluation information of model training, result evaluation information of model use, a model size, model inference duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

The apparatus in this embodiment may be configured to perform the method in any one of the method embodiments on the first communication device side. Specific implementation processes and technical effect of the apparatus are the same as those in the method embodiment on the first communication device side. For details, refer to the detailed descriptions in the method embodiment on the first communication device side. Details are not described herein again.

FIG. 8 is a second schematic structural diagram of a model obtaining apparatus according to this application. The model obtaining apparatus provided in this embodiment may be applied to a second communication device. As shown in FIG. 8, the model obtaining apparatus provided in this embodiment includes:
a receiving module 210, configured to receive a first request sent by a first communication device, where the first request is used to request to obtain information of at least one third communication device, and each third communication device is able to provide model information of at least one model required by the first communication device;
a processing module 220, configured to determine at least one third communication device according to the first request; and
a sending module 230, configured to send information of the at least one third communication device to the first communication device, where the information of the at least one third communication device is used for the first communication device to obtain model information of a plurality of models, and the plurality of models are used to derive data analytics result information.

Optionally, the first request includes: an analytics task identifier, where the analytics task identifier is used to identify a data analytics task to which a required model is applicable; and the first request further includes at least one of the following:
first indication information, where the first indication information is used to indicate to request to obtain a plurality of models;
the number of required models;
second indication information, where the second indication information is used to indicate to request to obtain information of a plurality of third communication devices;
the number of required third communication devices;
a sorting mode, where the sorting mode is used to indicate a sorting mode of obtained information of a plurality of third communication devices; or
model attribute information that a model needs to meet.

Optionally, the processing module 220 is further configured to:
determine the number of the at least one third communication device according to the first request sent by the first communication device.

Optionally, that the second communication device determines the number of the at least one third communication device according to the first request sent by the first communication device includes at least one of the following:
the second communication device determines, based on the first indication information and/or the number of required models, that the number of the at least one third communication device is 1, where the one third communication device is able to provide model information of the plurality of models or model information of models corresponding to the number of required models;
the second communication device determines, based on the first indication information and/or the number of required models, that the number of the at least one third communication device is greater than 1, where none of the plurality of third communication devices is able to provide model information of all of the plurality of models or model information of models corresponding to the number of required models;
the second communication device determines, based on the second indication information, that the number of the at least one third communication device is greater than 1; or
the second communication device determines, based on the number of required third communication devices, that the number of the at least one third communication device is the number of required third communication devices.

Optionally, the model attribute information includes at least one of the following: scope information of model use, a model identifier, result evaluation information of model training, result evaluation information of model use, a model size, model execution duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

Optionally, the receiving module 210 is further configured to:
receive a capability registration message sent by the third communication device, where the capability registration message includes at least one of the following: an analytics task identifier supported by the third communication device, a network function type of the third communication device, a network function instance identifier of the third communication device, the number of models corresponding to the analytics task identifier supported by the third communication device, or model attribute information of at least one model supported by the third communication device.

The apparatus in this embodiment may be configured to perform the method in any one of the method embodiments on the second communication device side. Specific implementation processes and technical effect of the apparatus are the same as those in the method embodiment on the second communication device side. For details, refer to the detailed descriptions in the method embodiment on the second communication device side. Details are not described herein again.

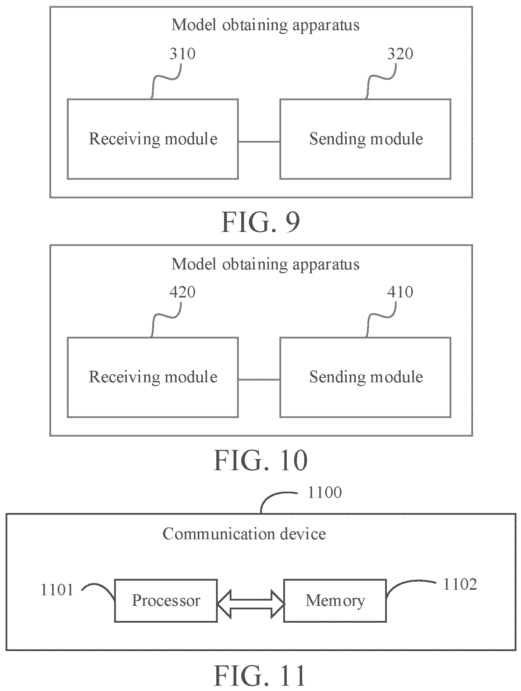

FIG. 9 is a third schematic structural diagram of a model obtaining apparatus according to this application. The model obtaining apparatus provided in this embodiment may be applied to a third communication device. As shown in FIG. 9, the model obtaining apparatus provided in this embodiment includes:
a receiving module 310, configured to receive a second request sent by a first communication device, where the second request is used to request to obtain at least one model; and
a sending module 320, configured to send model information of at least one model to the first communication device according to the second request, where the second request includes at least one of the following:
   an analytics task identifier, where the analytics task identifier is used to identify a data analytics task to which a required model is applicable;
   an identifier of a required model;
   the number of required models; or
   model attribute information that a model needs to meet.

Optionally, the model attribute information includes at least one of the following: scope information of model use, a model identifier, result evaluation information of model training, result evaluation information of model use, a model size, model execution duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

Optionally, the sending module 320 is further configured to:
send a capability registration message to a second communication device, where the capability registration message includes at least one the following: an analytics task identifier supported by the third communication device, a network function type of the third communication device, a network function instance identifier of the third communication device, the number of models corresponding to the analytics task identifier supported by the third communication device, or model attribute information of at least one model supported by the third communication device.

The apparatus in this embodiment may be configured to perform the method in any one of the method embodiments on the third communication device side. Specific implementation processes and technical effect of the apparatus are the same as those in the method embodiment on the third communication device side. For details, refer to the detailed descriptions in the method embodiment on the third communication device side. Details are not described herein again.

FIG. 10 is a third schematic structural diagram of a model obtaining apparatus according to this application. The model obtaining apparatus provided in this embodiment may be applied to a fourth communication device. As shown in FIG. 10, the model obtaining apparatus provided in this embodiment includes:
a sending module 410, configured to send a task request to a first communication device; and
a receiving module 420, configured to receive data analytics result information sent by the first communication device, where the data analytics result information is obtained by the first communication device by performing analytics based on a plurality of models, the plurality of models are obtained by the first communication device based on information of at least one third communication device, and each third communication device is able to provide model information of at least one model required by the first communication device.

The task request includes: an analytics task identifier, where the analytics task identifier is used to identify a data analytics task to which a required model is applicable; and the task request further includes at least one of the following:
first indication information, where the first indication information is used to indicate to request to obtain a plurality of models;
the number of required models;
second indication information, where the second indication information is used to indicate to request to obtain information of a plurality of third communication devices;
the number of required third communication devices;
a sorting mode, where the sorting mode is used to indicate a sorting mode of obtained information of a plurality of third communication devices; or
model attribute information that a model needs to meet.

Optionally, the model attribute information includes at least one of the following: scope information of model use, a model identifier, result evaluation information of model training, result evaluation information of model use, a model size, model execution duration, source information of training data, or time information of the training data, where the model size is used to represent a size of storage space required for storing or running a model, and the model inference duration is used to represent duration within which a model obtains a data inference result during running.

Optionally, the result evaluation information of model training includes at least one of the following: accuracy, error information, model training duration, or a data amount of model training; and the result evaluation information of model use includes at least one of the following: accuracy, error information, or model running duration.

Optionally, information of each third communication device includes at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

The apparatus in this embodiment may be configured to perform the method in any one of the method embodiments on the fourth communication device side. Specific implementation processes and technical effect of the apparatus are the same as those in the method embodiment on the fourth communication device side. For details, refer to the detailed descriptions in the method embodiment on the fourth communication device side. Details are not described herein again.

The model obtaining apparatus in the embodiments of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in the embodiments of this application.

The model obtaining apparatus provided in the embodiments of this application is capable of implementing the processes implemented in the method embodiments of FIG. 2 to FIG. 6, with the same technical effect achieved. To avoid repetition, details are not described herein again.

Optionally, as shown in FIG. 11, an embodiment of this application further provides a communication device 1100, including a processor 1101 and a memory 1102. The memory 1102 stores a program or instructions capable of running on the processor 1101. For example, in a case that the communication device 1100 is a terminal, when the program or instructions are executed by the processor 1101, the steps in the model obtaining method embodiments are implemented, with the same technical effect achieved. In a case that the communication device 1100 is a network-side device, when the program or instructions are executed by the processor 1101, the steps in the model obtaining method embodiments are implemented, with the same technical effect achieved. To avoid repetition, details are not described herein again.

An embodiment of this application further provides a first communication device, including a processor and a communication interface. The communication interface is configured to: send, for the first communication device, a first request to a second communication device, where the first request is used to request to obtain information of at least one third communication device, and each third communication device is able to provide model information of at least one model required by the first communication device; receive information of at least one third communication device that is sent by the second communication device; and obtain model information of a plurality of models based on the information of the at least one third communication device, where the plurality of models are used to derive data analytics result information. The embodiment of the first communication device corresponds to the method embodiment on the first communication device side, and all implementation processes and implementations of the method embodiment are applicable to the embodiment of the first communication device, with the same technical effect achieved.

An embodiment of this application further provides a second communication device, including a processor and a communication interface. The communication interface is configured to: receive a first request sent by a first communication device, where the first request is used to request to obtain information of at least one third communication device, and each third communication device is able to provide model information of at least one model required by the first communication device; and send information of the at least one third communication device to the first communication device, where the information of the at least one third communication device is used for the first communication device to obtain model information of a plurality of models, and the plurality of models are used to derive data analytics result information. The processor is configured to determine at least one third communication device according to the first request. The embodiment of the second communication device corresponds to the method embodiment on the second communication device side, and all implementation processes and implementations of the method embodiment are applicable to the embodiment of the second communication device, with the same technical effect achieved.

An embodiment of this application further provides a third communication device, including a processor and a communication interface. The communication interface is configured to: receive a second request sent by a first communication device, where the second request is used to request to obtain at least one model; and send model information of at least one model to the first communication device according to the second request, where the second request includes at least one of the following: an analytics task identifier, where the analytics task identifier is used to identify a data analytics task to which a required model is applicable; an identifier of a required model; the number of required models; or model attribute information that a model needs to meet. The embodiment of the third communication device corresponds to the method embodiment on the third communication device side, and all implementation processes and implementations of the method embodiment are applicable to the embodiment of the third communication device, with the same technical effect achieved.

An embodiment of this application further provides a fourth communication device, including a processor and a communication interface. The communication interface is configured to: send a task request to a first communication device; and receive data analytics result information sent by the first communication device, where the data analytics result information is obtained by the first communication device by performing analytics based on a plurality of models, the plurality of models are obtained by the first communication device based on information of at least one third communication device, and each third communication device is able to provide model information of at least one model required by the first communication device. The embodiment of the fourth communication device corresponds to the method embodiment on the fourth communication device side, and all implementation processes and implementations of the method embodiment are applicable to the embodiment of the fourth communication device, with the same technical effect achieved.

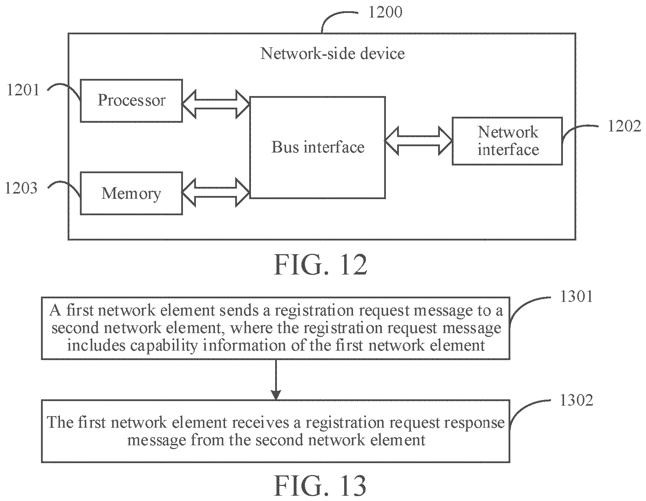

Specifically, an embodiment of this application further provides a network-side device. As shown in FIG. 12, the network-side device 1200 includes a processor 1201, a network interface 1202, and a memory 1203. The network interface 1202 is, for example, a common public radio interface (common public radio interface, CPRI).

Specifically, the network-side device 1200 in this embodiment of the present invention further includes instructions or a program stored in the memory 1203 and capable of running on the processor 1201, and the processor 1201 invokes the instructions or program in the memory 1203 to perform the method performed by the modules shown in FIG. 7 to FIG. 10, with the same technical effect achieved. To avoid repetition, details are not described herein again.

Optionally, the structure of the network-side device may be applied to the first communication device, the second communication device, the third communication device, and the fourth communication device.

An embodiment of this application further provides a readable storage medium. The readable storage medium stores a program or instructions. When the program or instructions are executed by a processor, the processes in the model obtaining method embodiments are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the model obtaining method embodiments, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the model obtaining method embodiments, with the same technical effect achieved. To avoid repetition, details are not described herein again.

An embodiment of this application further provides a communication system, including a first communication device, a second communication device, a third communication device, and a fourth communication device, where the first communication device, the second communication device, the third communication device, and the fourth communication device may be configured to perform the steps of the model obtaining method.

An embodiment of this application further provides a model processing method. As shown in FIG. 13, the model processing method includes the following steps:
Step 1301: A first network element sends a registration request message to a second network element, where the registration request message includes capability information of the first network element, and the capability information includes at least one of model quantity information and model information.
Step 1302: The first network element receives a registration request response message from the second network element.

The model quantity information is used to indicate the number of models that correspond to an analytics task identifier and that are supported by the first network element. The model information includes at least one of the following information of a model that corresponds to the analytics task identifier and that is supported by the first network element:
a model identifier;
model performance information;
a model size, where the model size is used to indicate storage space required for storing or running the model;
inference duration, where the inference duration is used to indicate duration required for performing a model inference operation based on the model;
source information of training data, where the source information of training data is used to indicate at least one of location information and network element information of a source of training data used by the model in a training stage; or
time information of training data, where the time information of training data is used to indicate time within which training data used by the model in a training stage is generated.

In this embodiment of this application, the first network element may be understood as a model training network element, for example, in some embodiments, may be a model training logical function (Model Training logical function, MTLF), also referred to as an MTLF included in a network data analytics function (Network Data Analytics Function, NWDAF). The second network element may be understood as an NRF.

It should be understood that the registration request message may further include other information in addition to the capability information, for example, may include:
an NF type, where the NF type is used to indicate a type of a network element in current registration, for example, an NWDAF or an MTLF;
a network element instance identification information (NF instance ID), used to indicate representation information of a network element in current network registration, for example, fully qualified domain name (Fully Qualified Domain Name, FQDN) or IP address information; or
a supported analytics task identifier (analytic ID), used to indicate a type of a task that the NWDAF network element can perform.

Optionally, the model performance information may be used to represent accuracy, an error value, and the like of an output result of a model. In some embodiments, the model performance information may include at least one of the following: first performance information, where the first performance information is used to indicate performance that a model is able to achieve in a training stage; or second performance information, where the second performance information is used to indicate performance that a model is able to achieve in an inference stage.

Optionally, after receiving the registration request message, the second network element may store information carried in the registration request message, and send the registration request response message to the first network element after determining that registration is successful.

Optionally, the model size may be represented by a parameter (parameter) of a model. The source information of training data and the time information of training data may be understood as data information for training a model. Certainly, in other embodiments, the registration request message may alternatively include other data information for training a model. This is not further limited herein.

It should be noted that, when the third network element needs to invoke a model in the first network element to perform a target analytics task, the third network element may first send a second request message to the second network element to request to find a first network element able to perform the target analytics task. Because capability information is stored in the second network element, N first network elements that have models able to be used to perform the target analytics task may be determined based on the capability information. Then the third network element selects a target network element from the N first network elements, and invokes a model in the target network element to perform the target analytics task, to be specific, performs model inference for the target task by using the model in the target network element. Because a first network element matching the target analytics task can be found from the second network element based on the capability information, reliability of subsequent model inference for the target analytics task can be improved. In addition, the following problem can be avoided: A new first network element needs to be found to perform model inference for the target analytics task again due to low accuracy and/or a large error value of model inference for the target analytics task. Therefore, in this embodiment of this application, efficiency of finding a first network element can be further improved.

For example, in some embodiments, when target information includes model quantity information, the second network element may obtain, through matching, a first network element meeting a model quantity requirement of the target analytics task. This can improve reliability of model inference for the target analytics task. In some embodiments, when target information includes model information, the first network element may obtain, through matching, a first network element meeting a model requirement (for example, a model performance requirement) of the target analytics task. This can improve reliability of model inference for the target analytics task.

Optionally, the third network element may be understood as a data analytics logical function (Analytics logical function, AnLF), also referred to as an AnLF included in an NWDAF.

In this embodiment of this application, a first network element sends a registration request message to a second network element, where the registration request message includes capability information of the first network element, and the capability information includes at least one of model quantity information and model information; and the first network element receives a registration request response message from the second network element. In this way, because the capability information is carried during registration, the second network element may determine, based on the capability information, a first network element matching a target analytics task, and then may invoke a model in the matching first network element to perform model inference for the target analytics task. Therefore, in this embodiment of this application, reliability of model inference can be improved.

Optionally, in some embodiments, after the first network element receives the registration request response message from the second network element, the method further includes:
the first network element receives a first request message from a third network element, where the first request message is used to obtain a target model able to be used to perform a target analytics task; and
the first network element sends a first request response message to the third network element, where the first request response message includes at least one of the target model and address information for obtaining the target model.

In this embodiment of this application, after obtaining N first network elements, the third network element may send the first request message to the first network elements to request to obtain a target model able to perform the target analytics task. The target analytics task request may be information received by the third network element from a fourth network element. For example, the fourth network element may send a task request message to the third network element, where the task request message may include an analytics task identifier of the target analytics task, and may further include task filter information. The task filter information may include filter information and an analytic target (analytic target) of a data analytics task model. The filter information of the data analytics task model may be referred to as machine learning model filter information (Machine Learning model filter info). The task filter information may be used to define a task scope, such as an analytics object (for example, mobility analytics for specific UE) of a model, target time of a task, an area of interest (Area of Interest, AOI), single network slice selection assistance information (Single Network Slice Selection Assistance Information, S-NSSAI), and a data network name (Data Network Name, DNN)

Optionally, after receiving the first request message, the first network element may determine, based on the first request message, a target model able to be used to perform the target analytics task, and then indicate the target model by using the first request response message. After receiving the first request response message, the third network element may perform a model inference operation for the target task by using the target model, derive a target analytics report, and finally send the target analytics report to the fourth network element.

Optionally, in some embodiments, the first request message includes an analytics task identifier of the target analytics task and model filter information, and the model filter information includes at least one of the following:
filter information of the number of models;
filter information of a model identifier;
filter information of model performance information;
filter information of a model size;
filter information of inference duration;
filter information of a source of training data; or
filter information of time of training data.

In this embodiment of this application, the model filter information may be determined based on the task filter information, or may be agreed upon in a protocol (for example, model filter information corresponding to different tasks is agreed upon in the protocol) or determined by the third network element itself. The target model fed back by the first network element should meet the model filter information. Details are as follows:

The filter information of the number of models may be understood as filter information of the number of models corresponding to the analytics task identifier of the target analytics task. In some embodiments, the filter information of the number of models may include a quantity threshold. In a case that the model filter information includes the filter information of the number of models, the number of target models that the first network element needs to feed back to the third network element should be greater than or equal to the quantity threshold, or the number of target models to be fed back should be less than or equal to the quantity threshold.

The filter information of a model identifier may include one or more preset model identifiers. In a case that the model filter information includes the filter information of a model identifier, the first network element needs to feed back, to the third network element, a target model among models corresponding to the preset model identifiers; or the third network element needs to feed back, to the third network element, a target model among models other than the models corresponding to the preset model identifiers.

The filter information of model performance information may include a performance indicator. In a case that the model filter information includes the filter information of performance information, the first network element needs to feed back a target model meeting the performance indicator to the third network element. The filter information of model performance information may include at least one of filter information of the first performance information and filter information of the second performance information.

The filter information of a model size may include a model size threshold. In a case that the model filter information includes the filter information of a model size, the first network element needs to feed back, to the third network element, a target model whose model size is greater than or equal to the model size threshold, or feed back a target model whose model size is less than or equal to the model size threshold.

The filter information of inference duration may include an inference time threshold. In a case that the model filter information includes the filter information of inference duration, the first network element needs to feed back, to the third network element, a target model whose inference duration is greater than or equal to the inference time threshold, or feed back a target model whose inference duration is less than or equal to the inference time threshold.

The filter information of a source of training data may include source information of training data. In a case that the model filter information includes the filter information of a source of training data, the first network element needs to feed back, to the third network element, a target model among models trained by using the source infonnation of training data; or the third network element needs to feed back, to the third network element, a target model among models other than the models trained by using the source information of training data.

The filter information of time information of training data may include a time threshold of training data. In a case that the model filter information includes the filter information of time information of training data, a time range may be determined based on the time threshold. The first network element needs to feed back, to the third network element, a target model that uses, in a training stage, training data generated within time that belongs to the time range.

Optionally, the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.

In this embodiment of this application, the first performance indicator may also be understood as performance of the model in training (performance in Training), and is a value obtained based on specific statistical calculation, for example, may be at least one of the accuracy in training (accuracy in Training, AiT) and the error value in training (Mean Absolute Error in Training, MAEIT). The accuracy in training may be referred to as accuracy of the model in training, and the accuracy may be obtained by dividing the number of times that the model obtains a correct decision-making result by the total number of times of decision-making. For example, the first network element may set a verification data set for evaluating accuracy of a model. The verification set includes data to be input to a model and actual label data. The first network element inputs verification input data to a trained model to obtain output data. Then the first network element compares the output data with the actual label data to verify consistency, and then obtains a value of accuracy of the model by using the foregoing calculation method.

The calculation method for the first performance indicator may include at least one of the following: a ratio of the number of accurate predictions by a model to the total number of predictions by the model, an MAE, a root mean square error (Root Mean Square Error), a recall (Recall), an F1 score (F1 score), and the like.

The first time information is expressed as a time node or a period of time (for example, including start time of calculation of the first performance indicator and end time of calculation of the first performance indicator).

The first result may represent a distribution status of the plurality of first performance indicators, and may be specifically calculated by using a preset calculation method. For example, the first result may be a mean, a median, or a variance.

Optionally, in some embodiments, the second performance information includes at least one of the following information of the model in use: a second performance indicator, a calculation method for the second performance indicator, second time information, a second value, and a second result, where the second performance indicator includes at least one of accuracy in use and an error value in use, and the second time information includes time information corresponding to calculation of the second performance indicator.

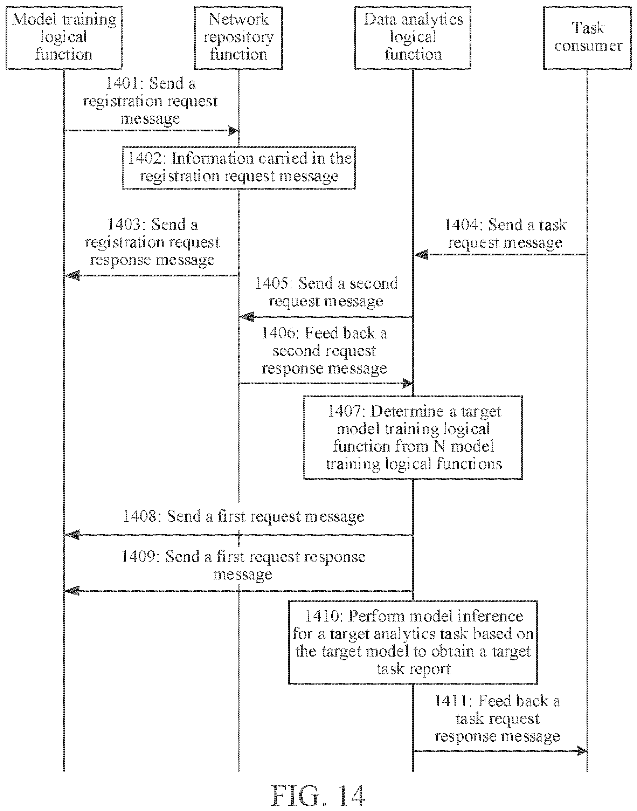

In this embodiment of this application, the use may be understood as using the model for model inference, the second performance information corresponds to the first performance information, and the second performance indicator may also be understood as performance of the model in use (performance in use). For example, the calculation method for the second performance indicator may include at least one of the following: a ratio of the number of accurate predictions by a model to the total number of predictions by the model, an MAE, a root mean square error (Root Mean Square Error), a recall (Recall), an F1 score (F1 score), and the like. The second time information is expressed as a time node or a period of time (for example, including start time of calculation of the second performance indicator and end time of calculation of the second performance indicator). The second result may represent a distribution status of the plurality of second performance indicators, and may be specifically calculated by using a preset calculation method. For example, the second result may be a mean, a median, or a variance. As shown in FIG. 14, performing, by one network element, model inference for a target analytics task by using a model in another network element includes the following process:
Step 1401: An MTLF sends an a registration request message to an NRF, where the registration request message may be referred to as a capability registration message for capability registration.

Optionally, the registration request message may include information such as identification information of the MTLF and a supported analytic ID, and may further include the foregoing capability information, to be specific, include at least one of model quantity information and model information.

Accuracy and an error value in the model information may be used for determining which one of two models is more suitable for the target analytics task. Distribution of accuracy may be used for determining whether performance of the model is stable. Whether a model matches the target analytics task may be determined based on source information and time information of training data of the model (for example, a model trained by using early data is more likely to be affected by a change in network data).

Step 1402: The NRF stores information carried in the registration request message.

Step 1403: The NRF sends a registration request response message.

Step 1404: A task consumer sends a task request message to an AnLF, where the task request message includes an analytics task identifier of the target analytics task, and filter information and an analytic target of a data analytics task model.

Optionally, an order of step 1403 and step 1404 is not agreed upon herein. Usually, step 1403 is performed before step 1404.

Step 1405: The AnLF sends a second request message to the NRF, where the second request message is used for finding a suitable MTLF, and may further include target requirement information in addition to the analytics task identifier of the target analytics task and the filter information of the data analytics task model.

Optionally, the target requirement information includes at least one of the following:
requirement information of the number of models;
requirement information of a model identifier;
requirement information of model performance information;
requirement information of a model size, where the model size is used to indicate storage space required for storing or running a model;
requirement information of inference duration, where the inference duration is used to indicate duration required for performing a model inference operation based on a model;
requirement information of a source of training data, where the source information of training data is used to indicate at least one of location information and network element information of a source of training data used by a model in a training stage; or
requirement information of time of training data, where the time information of training data is used to indicate time within which training data used by a model in a training stage is generated.

In this embodiment of this application, the target requirement information may be understood as a requirement for a model or a filter requirement for a model. The filter information of the number of models may be a quantity threshold. In this case, the number of models that a suitable MTLF can provide for performing the target analytics task needs to be greater than or equal to the quantity threshold, or less than or equal to the quantity threshold. The requirement information of a model identifier may include at least one model identifier. In this case, a model that a suitable MTLF can provide for performing the target analytics task includes or does not include a model corresponding to the at least one model identifier. The requirement information of model performance information may include a performance indicator (for example, may include at least one of a first performance indicator and a second performance indicator). In this case, a model that a suitable MTLF can provide for performing the target analytics task needs to meet a required performance indicator. The filter information of a model size may include a model size threshold. In this case, a model that a suitable MTLF can provide for performing the target analytics task needs to include a model whose model size is greater than or equal to the model size threshold, or needs to include a model whose model size is less than or equal to the model size threshold. The filter information of a source of training data may include source information of training data. In this case, a model that a suitable MTLF can provide for performing the target analytics task needs to include or not include a model trained by using the source information of training data. The time information of training data may include a time threshold of training data, and a time range may be determined based on the time threshold. In this case, a suitable MTLF needs to include a model that uses, in a training stage, training data generated within time that belongs to the time range.

Step 1406: The NRF feeds back a second request response message to the AnLF, where the second request response message needs to include determined N MTLFs, and may further include at least one of a task analytics identifier supported by each MTLF, model quantity information, and model information.

It should be understood that the NRF determines the N MTLFs based on the second request message. Optionally, each MTLF includes a model that supports the analytics task identifier of the target analytics task, and the model (or the MTLF) needs to meet the target requirement information and the filter information of the data analytics task model.

Optionally, in some embodiments, the second request response message may further include validity time corresponding to each of the N first network elements. The validity time may be understood as validity time of registered capability information of an MTLF. After the time elapses, the capability information of the MTLF may change. If a model in the MTLF is requested beyond the validity time, reliability of final model inference may be unable to be guaranteed. Therefore, the AnLF may preferentially request a model in an MTLF within the validity time.

Step 1407: The AnLF determines a target MTLF from the N MTLFs.

For example, if the NRF feeds back one MTLF, the MTLF is determined as a target MTLF; or if the NRF feeds back a plurality of MTLFs, one of the plurality of MTLFs further needs to be selected as a target MTLF. Certainly, in other embodiments, the AnLF may alternatively select at least two MTLFs as target MTLFs.

Step 1408: The AnLF sends a first request message (namely, a model obtaining request), for example, Nnwdaf_MLModelInfo_Request or Nnwdaf_MLModelProvision_Request, to the target MTLF.

The first request message may include the analytics task identifier of the target analytics task and model filter information.

After receiving the first request message, the AnLF may find, through matching, a suitable target model based on the analytics task identifier of the target analytics task and the model filter information.

Step 1409: The target MTLF sends a first request response message to the AnLF, where the first request response message includes the target model and address information for obtaining the target model.

That the first request information includes the target model may be understood as including a configuration file of the model, a description of the model, and the like. The address information of the target model may include a uniform resource locator (Uniform Resource Locator, URL), FQDN information, an IP address, and the like. After obtaining the address information, the AnLF may directly download the target model.

Step 1410: The AnLF performs model inference for the target analytics task based on the target model to obtain a target task report.

Optionally, the AnLF may obtain an inference result by using one target model, and report the inference result as a target task report. Alternatively, the AnLF may obtain different inference results by using a plurality of target models, and finally derive a target task report based on the plurality of inference results, for example, may perform an aggregation (aggregation) or voting (voting) operation on the plurality of inference results to obtain a final inference result as the target task report. The target task report may be understood as data analytics result information.

Step 1411: The AnLF feeds back a task request response message to the task consumer, where the task request response message includes the target analytics report.

In an implementation, the following solutions are protected in this application:
1. A model processing method, including:
   sending, by a first network element, a registration request message to a second network element, where the registration request message includes capability information of the first network element, and the capability information includes at least one of model quantity information and model information; and
   receiving, by the first network element, a registration request response message from the second network element, where
   the model quantity information is used to indicate the number of models that correspond to an analytics task identifier and that are supported by the first network element, and the model information includes at least one of the following information of a model that corresponds to the analytics task identifier and that is supported by the first network element:
      a model identifier;
      model performance information;
      a model size, where the model size is used to indicate storage space required for storing or running the model;
      inference duration, where the inference duration is used to indicate duration required for performing a model inference operation based on the model;
      source information of training data, where the source information of training data is used to indicate at least one of location information and network element information of a source of training data used by the model in a training stage; or
      time information of training data, where the time information of training data is used to indicate time within which training data used by the model in a training stage is generated.
2. The method according to 1, where after the receiving, by the first network element, a registration request response message from the second network element, the method further includes:
   receiving, by the first network element, a first request message from a third network element, where the first request message is used to obtain a target model able to be used to perform a target analytics task; and
   sending, by the first network element, a first request response message to the third network element, where the first request response message includes at least one of the target model and address information for obtaining the target model.
3. The method according to 2, where the first request message includes an analytics task identifier of the target analytics task and model filter information, and the model filter information includes at least one of the following:
   filter information of the number of models;
   filter information of a model identifier;
   filter information of model performance information;
   filter information of a model size;
   filter information of inference duration;
   filter information of a source of training data; or
   filter information of time of training data.
4. The method according to any one of 1 to 3, where the model performance information includes at least one of the following:
   first performance information, where the first performance information is used to indicate performance that a model is able to achieve in a training stage; or
   second performance information, where the second performance information is used to indicate performance that a model is able to achieve in an inference stage.
5. The method according to 4, where the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.
6. The method according to 4, where the second performance information includes at least one of the following information of the model in use: a second performance indicator, a calculation method for the second performance indicator, second time information, a second value, and a second result, where the second performance indicator includes at least one of accuracy in use and an error value in use, the second time information includes time information corresponding to calculation of the second performance indicator, the second value is used to represent an amount of data used for calculating the second performance indicator, and the second result is a result value obtained through calculation based on a plurality of second performance indicators.
7. A model processing method, including:
   receiving, by a second network element, a registration request message from a first network element, where the registration request message includes capability information of the first network element;
   storing, by the second network element, the capability information, and sending a registration request response message to the first network element, where
   the capability information includes at least one of model quantity information and model information, the model quantity information is used to indicate the number of models that correspond to an analytics task identifier and that are supported by the first network element, and the model information includes at least one of the following information of a model that corresponds to the analytics task identifier and that is supported by the first network element:
      a model identifier;
      model performance information;
      a model size, where the model size is used to indicate storage space required for storing or running the model;
      inference duration, where the inference duration is used to indicate duration required for performing a model inference operation based on the model;
      source information of training data, where the source information of training data is used to indicate at least one of location information and network element information of a source of training data used by the model in a training stage; or
      time information of training data, where the time information of training data is used to indicate time within which training data used by the model in a training stage is generated.
8. The method according to 7, where after the storing, by the second network element, the capability information, and sending a registration request response message to the first network element, the method further includes:
   receiving, by the second network element, a second request message from a third network element, where the second request message includes an analytics task identifier of a target analytics task;
   determining, by the second network element, N first network elements based on the second request message, where the N first network elements are first network elements able to provide a model for performing the target analytics task, and N is a positive integer; and
   sending, by the second network element, a second request response message to the third network element, where the second request response message is used to indicate the N first network elements.
9. The method according to 8, where the second request message further includes target requirement information, any one of the N first network elements meets the target requirement information, and the target requirement information includes at least one of the following:
   requirement information of the number of models;
   requirement information of a model identifier;
   requirement information of model performance information;
   requirement information of a model size;
   requirement information of inference duration;
   requirement information of a source of training data; or
   requirement information of time of training data.
10. The method according to 8, where the second request response message includes at least one of identification information of the N first network elements and address information of the N first network elements.
11. The method according to 8, where the second request response message further includes validity time corresponding to each of the N first network elements.
12. The method according to any one of 7 to 11, where the model performance information includes at least one of the following:
   first performance information, where the first performance information is used to indicate performance that a model is able to achieve in a training stage; or
   second performance information, where the second performance information is used to indicate performance that a model is able to achieve in an inference stage.
13. The method according to 12, where the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.
14. The method according to 12, where the second performance information includes at least one of the following information of the model in use: a second performance indicator, a calculation method for the second performance indicator, second time information, a second value, and a second result, where the second performance indicator includes at least one of accuracy in use and an error value in use, the second time information includes time information corresponding to calculation of the second performance indicator, the second value is used to represent an amount of data used for calculating the second performance indicator, and the second result is a result value obtained through calculation based on a plurality of second performance indicators.
15. A model processing method, including:
   sending, by a third network element, a second request message to a second network element, where the second request message includes an analytics task identifier of a target analytics task;
   receiving, by the third network element, a second request response message from the second network element, where the second request response message is used to indicate N first network elements, the N first network elements are first network elements able to provide a model for performing the target analytics task, and N is a positive integer;
   sending, by the third network element, a first request message to a target network element among the N first network elements; and
   receiving, by the third network element, a first request response message from the target network element, where the first request response message includes at least one of a target model and address information for obtaining the target model, and the target model may be used to perform the target analytics task.
16. The method according to 15, where the first request message includes an analytics task identifier of the target analytics task and model filter information, and the model filter information includes at least one of the following:
   filter information of the number of models;
   filter information of a model identifier;
   model performance information;
   filter information of a model size, where the model size is used to indicate storage space required for storing or running a model;
   filter information of inference duration, where the inference duration is used to indicate duration required for performing a model inference operation based on a model;
   filter information of a source of training data, where the source information of training data is used to indicate at least one of location information and network element information of a source of training data used by a model in a training stage; or
   filter information of time of training data, where the time information of training data is used to indicate time within which training data used by a model in a training stage is generated.
17. The method according to 16, where the model performance information includes at least one of the following:
   first performance information, where the first performance information is used to indicate performance that a model is able to achieve in a training stage; or
   second performance information, where the second performance information is used to indicate performance that a model is able to achieve in an inference stage.
18. The method according to 17, where the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.
19. The method according to 17, where the second performance information includes at least one of the following information of the model in use: a second performance indicator, a calculation method for the second performance indicator, second time information, a second value, and a second result, where the second performance indicator includes at least one of accuracy in use and an error value in use, the second time information includes time information corresponding to calculation of the second performance indicator, the second value is used to represent an amount of data used for calculating the second performance indicator, and the second result is a result value obtained through calculation based on a plurality of second performance indicators.
20. The method according to 15, where the second request message further includes target requirement information, any one of the N first network elements meets the target requirement information, and the target requirement information includes at least one of the following:
   requirement information of the number of models;
   requirement information of a model identifier;
   requirement information of model performance information;
   requirement information of a model size, where the model size is used to indicate storage space required for storing or running a model;
   requirement information of inference duration, where the inference duration is used to indicate duration required for performing a model inference operation based on a model;
   requirement information of a source of training data, where the source information of training data is used to indicate at least one of location information and network element information of a source of training data used by a model in a training stage; or
   requirement information of time of training data, where the time information of training data is used to indicate time within which training data used by a model in a training stage is generated.
21. The method according to 15, where before the sending, by a third network element, a second request message to a second network element, the method further includes:
   receiving, by the third network element, a task request message from a fourth network element, where the task request message includes the analytics task identifier of the target analytics task.
22. The method according to 21, where after the receiving, by the third network element, a first request response message from the target network element, the method further includes:
   performing, by the third network element, the target analytics task by using the target model to obtain a target analytics report; and
   sending, by the third network element, a task request response message to the fourth network element, where the task request response message includes the target analytics report.
23. The method according to 22, where the number of target models is M1, M1 is a positive integer, and the performing, by the third network element, the target analytics task by using the target model to obtain a target analytics report includes:
   performing, by the third network element, model inference for the target analytics task by using the M2 target models to obtain M2 inference results, where M2 is a positive integer less than or equal to M1; and
   generating, by the third network element, the target analytics report based on the M2 inference results.
24. The method according to 15, where the target network element is one first network element.
25. The method according to 15, where the second request response message includes at least one of identification information of the N first network elements and address information of the N first network elements.
26. The method according to 15, where the second request response message further includes validity time corresponding to each of the N first network elements.
27. A model processing apparatus, including:
   a first sending module, configured to send a registration request message to a second network element, where the registration request message includes capability information of the first network element, and the capability information includes at least one of model quantity information and model information; and
   a first receiving module, configured to receive a registration request response message from the second network element, where
   the model quantity information is used to indicate the number of models that correspond to an analytics task identifier and that are supported by the first network element, and the model information includes at least one of the following information of a model that corresponds to the analytics task identifier and that is supported by the first network element:
      a model identifier;
      model performance information;
      a model size, where the model size is used to indicate storage space required for storing or running the model;
      inference duration, where the inference duration is used to indicate duration required for performing a model inference operation based on the model;
      source information of training data, where the source information of training data is used to indicate at least one of location information and network element information of a source of training data used by the model in a training stage; or
      time information of training data, where the time information of training data is used to indicate time within which training data used by the model in a training stage is generated.
28. The apparatus according to 27, where the first receiving module is further configured to receive a first request message from a third network element, where the first request message is used to obtain a target model able to be used to perform a target analytics task; and
   the first sending module is further configured to send a first request response message to the third network element, where the first request response message includes at least one of the target model and address information for obtaining the target model.
29. The apparatus according to 28, where the first request message includes an analytics task identifier of the target analytics task and model filter information, and the model filter information includes at least one of the following:
   filter information of the number of models;
   filter information of a model identifier;
   filter information of model performance information;
   filter information of a model size;
   filter information of inference duration;
   filter information of a source of training data; or
   filter information of time of training data.
30. The apparatus according to any one of 27 to 29, where the model performance information includes at least one of the following:
   first performance information, where the first performance information is used to indicate performance that a model is able to achieve in a training stage; or
   second performance information, where the second performance information is used to indicate performance that a model is able to achieve in an inference stage.
31. The apparatus according to 30, where the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.
32. The apparatus according to 30, where the second performance information includes at least one of the following information of the model in use: a second performance indicator, a calculation method for the second performance indicator, second time information, a second value, and a second result, where the second performance indicator includes at least one of accuracy in use and an error value in use, the second time information includes time information corresponding to calculation of the second performance indicator, the second value is used to represent an amount of data used for calculating the second performance indicator, and the second result is a result value obtained through calculation based on a plurality of second performance indicators.
33. A model processing apparatus, including:
   a second receiving module, configured to receive a registration request message from a first network element, where the registration request message includes capability information of the first network element;
   a storage module, configured to store the capability information; and
   a second sending module, configured to send a registration request response message to the first network element, where
   the capability information includes at least one of model quantity information and model information, the model quantity information is used to indicate the number of models that correspond to an analytics task identifier and that are supported by the first network element, and the model information includes at least one of the following information of a model that corresponds to the analytics task identifier and that is supported by the first network element:
      a model identifier;
      model performance information;
      a model size, where the model size is used to indicate storage space required for storing or running the model;
      inference duration, where the inference duration is used to indicate duration required for performing a model inference operation based on the model;
      source information of training data, where the source information of training data is used to indicate at least one of location information and network element information of a source of training data used by the model in a training stage; or
      time information of training data, where the time information of training data is used to indicate time within which training data used by the model in a training stage is generated.
34. The apparatus according to 33, where the apparatus further includes a first determining module;
   the second receiving module 701 is further configured to receive a second request message from a third network element, where the second request message includes an analytics task identifier of a target analytics task;
   the first determining module is configured to determine N first network elements based on the second request message, where the N first network elements are first network elements able to provide a model for performing the target analytics task, and N is a positive integer; and
   the second sending module 703 is further configured to send a second request response message to the third network element, where the second request response message is used to indicate the N first network elements.
35. The apparatus according to 34, where the second request message further includes target requirement information, any one of the N first network elements meets the target requirement information, and the target requirement information includes at least one of the following:
   requirement information of the number of models;
   requirement information of a model identifier;
   requirement information of model performance information;
   requirement information of a model size;
   requirement information of inference duration;
   requirement information of a source of training data; or
   requirement information of time of training data.
36. The apparatus according to 34, where the second request response message includes at least one of identification information of the N first network elements and address information of the N first network elements.
37. The apparatus according to any one of 34 to 36, where the second request response message further includes validity time corresponding to each of the N first network elements.
38. The apparatus according to any one of 33 to 37, where the model performance information includes at least one of the following:
   first performance information, where the first performance information is used to indicate performance that a model is able to achieve in a training stage; or
   second performance information, where the second performance information is used to indicate performance that a model is able to achieve in an inference stage.
39. The apparatus according to 38, where the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.
40. The apparatus according to 39, where the second performance information includes at least one of the following information of the model in use: a second performance indicator, a calculation method for the second performance indicator, second time information, a second value, and a second result, where the second performance indicator includes at least one of accuracy in use and an error value in use, the second time information includes time information corresponding to calculation of the second performance indicator, the second value is used to represent an amount of data used for calculating the second performance indicator, and the second result is a result value obtained through calculation based on a plurality of second performance indicators.
41. A model processing apparatus, including:
   a third sending module, configured to send a second request message to a second network element, where the second request message includes an analytics task identifier of a target analytics task; and
   a third receiving module, further configured to receive a second request response message from the second network element, where the second request response message is used to indicate N first network elements, the N first network elements are first network elements able to provide a model for performing the target analytics task, and N is a positive integer, where
   the third sending module is further configured to send a first request message to a target network element among the N first network elements; and
   the third receiving module is further configured to receive a first request response message from the target network element, where the first request response message includes at least one of a target model and address information for obtaining the target model, and the target model may be used to perform the target analytics task.
42. The apparatus according to 41, where the first request message includes an analytics task identifier of the target analytics task and model filter information, and the model filter information includes at least one of the following:
   filter information of the number of models;
   filter information of a model identifier;
   model performance information;
   filter information of a model size, where the model size is used to indicate storage space required for storing or running a model;
   filter information of inference duration, where the inference duration is used to indicate duration required for performing a model inference operation based on a model;
   filter information of a source of training data, where the source information of training data is used to indicate at least one of location information and network element information of a source of training data used by a model in a training stage; or
   filter information of time of training data, where the time information of training data is used to indicate time within which training data used by a model in a training stage is generated.
43. The apparatus according to 42, where the model performance information includes at least one of the following:
   first performance information, where the first performance information is used to indicate performance that a model is able to achieve in a training stage; or
   second performance information, where the second performance information is used to indicate performance that a model is able to achieve in an inference stage.
44. The apparatus according to 43, where the first performance information includes at least one of the following information of the model in training: a first performance indicator, a calculation method for the first performance indicator, first time information, a first value, and a first result, where the first performance indicator includes at least one of accuracy in training and an error value in training, the first time information includes time information corresponding to calculation of the first performance indicator, the first value is used to represent an amount of data used for calculating the first performance indicator, and the first result is a result value obtained through calculation based on a plurality of first performance indicators.
45. The apparatus according to 43, where the second performance information includes at least one of the following information of the model in use: a second performance indicator, a calculation method for the second performance indicator, second time information, a second value, and a second result, where the second performance indicator includes at least one of accuracy in use and an error value in use, the second time information includes time information corresponding to calculation of the second performance indicator, the second value is used to represent an amount of data used for calculating the second performance indicator, and the second result is a result value obtained through calculation based on a plurality of second performance indicators.
46. The apparatus according to 41, where the second request message further includes target requirement information, any one of the N first network elements meets the target requirement information, and the target requirement information includes at least one of the following:
   requirement information of the number of models;
   requirement information of a model identifier;
   requirement information of model performance information;
   requirement information of a model size, where the model size is used to indicate storage space required for storing or running a model;
   requirement information of inference duration, where the inference duration is used to indicate duration required for performing a model inference operation based on a model;
   requirement information of a source of training data, where the source information of training data is used to indicate at least one of location information and network element information of a source of training data used by a model in a training stage; or
   requirement information of time of training data, where the time information of training data is used to indicate time within which training data used by a model in a training stage is generated.
47. The apparatus according to 46, where before the sending, by a third network element, a second request message to a second network element, the method further includes:
   receiving, by the third network element, a task request message from a fourth network element, where the task request message includes the analytics task identifier of the target analytics task.
48. The apparatus according to 47, where the number of target models is M1, M1 is a positive integer, and the performing, by the third network element, the target analytics task by using the target model to obtain a target analytics report includes:
   performing, by the third network element, model inference for the target analytics task by using the M2 target models to obtain M2 inference results, where M2 is a positive integer less than or equal to M1; and
   generating, by the third network element, the target analytics report based on the M2 inference results.
49. The apparatus according to 40, where the target network element is one first network element.
50. The apparatus according to 40, where the second request response message includes at least one of identification information of the N first network elements and address information of the N first network elements.
51. The apparatus according to 40, where the second request response message further includes validity time corresponding to each of the N first network elements.
52. A network-side device, including a processor and a memory, where the memory stores a program or instructions capable of running on the processor, and when the program or instructions are executed by the processor, the steps of the model processing method according to any one of 1 to 26 are implemented.
53. A readable storage medium, where the readable storage medium stores a program or instructions, and when the program or instructions are executed by a processor, the steps of the model processing method according to any one of 1 to 26 are implemented.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. A model obtaining method, comprising:
sending, by a first communication device, a first request to a second communication device, wherein the first request is used to request to obtain information of at least one third communication device, and each third communication device is able to provide model information of at least one model required by the first communication device;
receiving, by the first communication device, information of at least one third communication device that is sent by the second communication device; and
obtaining, by the first communication device, model information of a plurality of models based on the information of the at least one third communication device, wherein the plurality of models are used to derive data analytics result information.

2. The model obtaining method according to claim 1, wherein the method further comprises:
obtaining, by the first communication device, the plurality of models based on the model information of the plurality of models; and
performing, by the first communication device, analytics based on the plurality of models to obtain the data analytics result information.

3. The model obtaining method according to claim 2, wherein the performing, by the first communication device, analysis based on the plurality of models to obtain the data analytics result information comprises:
performing, by the first communication device, a model inference operation based on each of the plurality of models to obtain a plurality of data inference results; and
processing, by the first communication device, the plurality of data inference results to obtain the data analytics result information.

4. The model obtaining method according to claim 3, wherein the processing, by the first communication device, the plurality of data inference results to obtain the data analytics result information comprises at least one of the following:
performing, by the first communication device, weighted averaging on the plurality of data inference results to obtain the data analytics result information;
performing, by the first communication device, an averaging operation on the plurality of inference result data to obtain the analytics result information;
accumulating, by the first communication device, the plurality of inference result data to obtain the analytics result information; or
accumulating, by the first communication device, the plurality of inference result data with performance taken into account to obtain the analytics result information.

5. The model obtaining method according to any one of claims 1 to 4, wherein before the sending, by a first communication device, a first request to a second communication device, the method further comprises:
receiving, by the first communication device, a task request sent by a fourth communication device;
the sending, by a first communication device, a first request to a second communication device comprises:
sending, by the first communication device, the first request to the second communication device according to the task request; and
after the performing, by the first communication device, analytics based on the plurality of models to obtain the data analytics result information, the method further comprises:
sending, by the first communication device, the data analytics result information to the fourth communication device.

6. The model obtaining method according to any one of claims 1 to 4, wherein the obtaining, by the first communication device, model information of a plurality of models based on the information of the at least one third communication device comprises:
determining, by the first communication device, at least one target communication device based on the information of the at least one third communication device and model attribute information that a model needs to meet, and obtaining the model information of the plurality of models from the at least one target communication device, wherein each target communication device is able to provide model information of a model matching the model attribute information.

7. The model obtaining method according to any one of claims 1 to 4, wherein the first request comprises:
an analytics task identifier, wherein the analytics task identifier is used to identify a data analytics task to which a required model is applicable; and
the first request further comprises at least one of the following:
first indication information, wherein the first indication information is used to indicate to request to obtain a plurality of models;
the number of required models;
second indication information, wherein the second indication information is used to indicate to request to obtain information of a plurality of third communication devices;
the number of required third communication devices;
a sorting mode, wherein the sorting mode is used to indicate a sorting mode of obtained information of a plurality of third communication devices; or
model attribute information that a model needs to meet.

8. The model obtaining method according to any one of claims 1 to 3, wherein
information of each third communication device comprises at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

9. The model obtaining method according to claim 6, wherein the obtaining the model information of the plurality of models from the at least one target communication device comprises:
sending, by the first communication device, a second request to the at least one target communication device, wherein the second request is used to obtain the model information of the plurality of models from the at least one target communication device; and
receiving, by the first communication device, the model information of the plurality of models that is sent by the at least one target communication device, wherein
the second request comprises at least one of the following:
an analytics task identifier, wherein the analytics task identifier is used to identify a data analytics task to which a required model is applicable;
an identifier of a required model;
the number of required models; or
model attribute information that a model needs to meet.

10. The model obtaining method according to claim 9, wherein the sending, by the first communication device, a second request to the at least one target communication device comprises:
sending, by the first communication device, the second request to one of the at least one target communication device;
the receiving, by the first communication device, the model information of the plurality of models that is sent by the at least one target communication device comprises:
receiving, by the first communication device, the model information of the plurality of models that is sent by the one target communication device; and
before the sending, by the first communication device, the second request to one of the at least one target communication device, the method further comprises:
determining, by the first communication device, that the one target communication device is able to provide the model information of the plurality of models.

11. The model obtaining method according to claim 9, wherein the sending, by the first communication device, a second request to the at least one target communication device comprises:
sending, by the first communication device, the second request to a plurality of target communication devices among the at least one target communication device;
the receiving, by the first communication device, the model information of the plurality of models that is sent by the at least one target communication device comprises:
receiving, by the first communication device, the model information of the plurality of models that is sent by the plurality of target communication devices; and
before the sending, by the first communication device, the second request to a plurality of target communication devices among the at least one target communication device, the method further comprises:
determining, by the first communication device, that none of the at least one target communication device is able to provide model information of all of the plurality of models.

12. The model obtaining method according to any one of claims 6 to 9, wherein the model attribute information comprises at least one of the following: scope information of model use, a model identifier, result evaluation information of model training, result evaluation information of model use, a model size, model inference duration, source information of training data, or time information of the training data, wherein the model size is used to represent a size of storage space required for storing or running a model, and the model inference duration is used to represent duration within which a model obtains a data inference result during running.

13. The model obtaining method according to claim 12, wherein
the result evaluation information of model training comprises at least one of the following:
accuracy, error information, model training duration, or a data amount of model training; and the result evaluation information of model use comprises at least one of the following: accuracy, error information, or model running duration.

14. A model obtaining method, comprising:
receiving, by a second communication device, a first request sent by a first communication device, wherein the first request is used to request to obtain information of at least one third communication device, and each third communication device is able to provide model information of at least one model required by the first communication device;
determining, by the second communication device, at least one third communication device according to the first request; and
sending, by the second communication device, information of the at least one third communication device to the first communication device, wherein the information of the at least one third communication device is used for the first communication device to obtain model information of a plurality of models, and the plurality of models are used to derive data analytics result information.

15. The model obtaining method according to claim 14, wherein the first request comprises: an analytics task identifier, wherein the analytics task identifier is used to identify a data analytics task to which a required model is applicable; the first request further comprises at least one of the following:
first indication information, wherein the first indication information is used to indicate to request to obtain a plurality of models;
the number of required models;
second indication information, wherein the second indication information is used to indicate to request to obtain information of a plurality of third communication devices;
the number of required third communication devices;
a sorting mode, wherein the sorting mode is used to indicate a sorting mode of obtained information of a plurality of third communication devices; or
model attribute information that a model needs to meet.

16. The model obtaining method according to claim 15, wherein the method further comprises:
determining, by the second communication device, the number of the at least one third communication device according to the first request sent by the first communication device.

17. The model obtaining method according to claim 16, wherein the determining, by the second communication device, the number of the at least one third communication device according to the first request sent by the first communication device comprises at least one of the following:
determining, by the second communication device based on the first indication information and/or the number of required models, that the number of the at least one third communication device is 1, wherein the one third communication device is able to provide model information of the plurality of models or model information of models corresponding to the number of required models;
determining, by the second communication device based on the first indication information and/or the number of required models, that the number of the at least one third communication device is greater than 1, wherein none of the plurality of third communication devices is able to provide model information of all of the plurality of models or model information of models corresponding to the number of required models;
determining, by the second communication device based on the second indication information, that the number of the at least one third communication device is greater than 1; or
determining, by the second communication device based on the number of required third communication devices, that the number of the at least one third communication device is the number of required third communication devices.

18. The model obtaining method according to claim 15, wherein
the model attribute information comprises at least one of the following: scope information of model use, a model identifier, result evaluation information of model training, result evaluation information of model use, a model size, model execution duration, source information of training data, or time information of the training data, wherein the model size is used to represent a size of storage space required for storing or running a model, and the model inference duration is used to represent duration within which a model obtains a data inference result during running.

19. The model obtaining method according to claim 18, wherein
the result evaluation information of model training comprises at least one of the following:
accuracy, error information, model training duration, or a data amount of model training; and the result evaluation information of model use comprises at least one of the following: accuracy, error information, or model running duration.

20. The model obtaining method according to any one of claims 14 to 19, wherein
information of each third communication device comprises at least one of the following:
an analytics task identifier supported by the third communication device, an identifier of the third communication device, an address of the third communication device, the number of models corresponding to the analytics task identifier supported by the third communication device, or model attribute information of at least one model supported by the third communication device.

21. The model obtaining method according to any one of claims 14 to 19, wherein the method further comprises:
receiving, by the second communication device, a capability registration message sent by the third communication device, wherein the capability registration message comprises at least one of the following: an analytics task identifier supported by the third communication device, a network function type of the third communication device, a network function instance identifier of the third communication device, the number of models corresponding to the analytics task identifier supported by the third communication device, or model attribute information of at least one model supported by the third communication device.

22. A model obtaining method, comprising:
receiving, by a third communication device, a second request sent by a first communication device, wherein the second request is used to request to obtain at least one model; and
sending, by the third communication device, model information of at least one model to the first communication device according to the second request, wherein the second request comprises at least one of the following:
an analytics task identifier, wherein the analytics task identifier is used to identify a data analytics task to which a required model is applicable;
an identifier of a required model;
the number of required models; or
model attribute information that a model needs to meet.

23. The model obtaining method according to claim 22, wherein the method further comprises:
sending, by the third communication device, a capability registration message to a second communication device, wherein the capability registration message comprises at least one the following: an analytics task identifier supported by the third communication device, a network function type of the third communication device, a network function instance identifier of the third communication device, the number of models corresponding to the analytics task identifier supported by the third communication device, or model attribute information of at least one model supported by the third communication device.

24. A model obtaining method, comprising:
sending, by a fourth communication device, a task request to a first communication device; and
receiving, by the fourth communication device, data analytics result information sent by the first communication device, wherein the data analytics result information is obtained by the first communication device by performing analytics based on a plurality of models, the plurality of models are obtained by the first communication device based on information of at least one third communication device, and each third communication device is able to provide model information of at least one model required by the first communication device.

25. A model obtaining apparatus, comprising:
a sending module, configured to send a first request to a second communication device, wherein the first request is used to request to obtain information of at least one third communication device, and each third communication device is able to provide model information of at least one model required by a first communication device;
a receiving module, configured to receive information of at least one third communication device that is sent by the second communication device; and
an obtaining module, configured to obtain model information of a plurality of models based on the information of the at least one third communication device, wherein the plurality of models are used to derive data analytics result information.

26. A model obtaining apparatus, comprising:
a receiving module, configured to receive a first request sent by a first communication device, wherein the first request is used to request to obtain information of at least one third communication device, and each third communication device is able to provide model information of at least one model required by the first communication device;
a processing module, configured to determine at least one third communication device according to the first request; and
a sending module, configured to send information of the at least one third communication device to the first communication device, wherein the information of the at least one third communication device is used for the first communication device to obtain model information of a plurality of models, and the plurality of models are used to derive data analytics result information.

27. A model obtaining apparatus, comprising:
a receiving module, configured to receive a second request sent by a first communication device, wherein the second request is used to request to obtain at least one model; and
a sending module, configured to send model information of at least one model to the first communication device according to the second request, wherein the second request comprises at least one of the following:
an analytics task identifier, wherein the analytics task identifier is used to identify a data analytics task to which a required model is applicable;
an identifier of a required model;
the number of required models; or
model attribute information that a model needs to meet.

28. A model obtaining apparatus, comprising:
a sending module, configured to send a task request to a first communication device; and
a receiving module, configured to receive data analytics result information sent by the first communication device, wherein the data analytics result information is obtained by the first communication device by performing analytics based on a plurality of models, the plurality of models are obtained by the first communication device based on information of at least one third communication device, and each third communication device is able to provide model information of at least one model required by the first communication device.

29. A first communication device, comprising a processor and a memory, wherein the memory stores a program or instructions capable of running on the processor, and when the program or instructions are executed by the processor, the steps of the model obtaining method according to any one of claims 1 to 13 are implemented.

30. A second communication device, comprising a processor and a memory, wherein the memory stores a program or instructions capable of running on the processor, and when the program or instructions are executed by the processor, the steps of the model obtaining method according to any one of claims 14 to 21 are implemented.

31. A third communication device, comprising a processor and a memory, wherein the memory stores a program or instructions capable of running on the processor, and when the program or instructions are executed by the processor, the steps of the model obtaining method according to claim 22 or 23 are implemented.

32. A fourth communication device, comprising a processor and a memory, wherein the memory stores a program or instructions capable of running on the processor, and when the program or instructions are executed by the processor, the steps of the model obtaining method according to claim 24 are implemented.

33. A readable storage medium, wherein the readable storage medium stores a program or instructions, and when the program or instructions are executed by a processor, the model obtaining method according to any one of claims 1 to 13 is implemented, or the model obtaining method according to any one of claims 14 to 21 is implemented, or the model obtaining method according to claim 22 or 23 is implemented, or the steps of the model obtaining method according to claim 24 are implemented.
